# EUROPEAN PATENT APPLICATION

(11) **EP 4 210 075 A1**
(43) Date of publication of application: **12.07.2023**
(21) Application number: 21871178.6
(22) Date of filing: 24.08.2021
(51) Int. Cl.: H01F 27/28

(54) **COIL ASSEMBLY, ELECTRONIC DEVICE, AND WIRELESS CHARGER**

(30) Priority: 22.09.2020 CN 202011003878
(71) Applicant: Huawei Technologies Co., Ltd., Shenzhen, Guangdong 518129 (CN)
(72) Inventor: PEI, Changsheng, Shenzhen, Guangdong 518129 (CN); ZHANG, Anle, Shenzhen, Guangdong 518129 (CN); CHEN, Yufei, Shenzhen, Guangdong 518129 (CN)
(74) Representative: Maiwald GmbH
(86) International application number: PCT/CN2021/114333
(87) International publication number: WO 2022/062805

(57) **Abstract**

This application relates to the field of wireless charging, and provides a coil assembly, an electronic device, and a wireless charger. The coil assembly includes a first coil winding, a second coil winding, and a circuit board. The first coil winding includes a plurality of first wire groups, and has a first lead-out end connected to an external circuit. The second coil winding includes a plurality of second wire groups, and has a second lead-out end connected to the external circuit. The second coil winding is stacked with the first coil winding. A plurality of first terminals and a plurality of second terminals are disposed on the circuit board. Each first terminal is connected to each second terminal by using a cable. In a plurality of cables used to connect the plurality of first terminals and the plurality of second terminals, at least two cables are changed to different line layers in a cross region through first vias to be disposed in a crossed manner. A first connection end of each first wire group is connected to a second connection end of each second wire group by the first terminal and the second terminal. The coil windings of the coil assembly in this application generate low heat, and transmission efficiency of electric energy is high.

## Description

### CROSS-REFERENCE TO RELATED APPLICATIONS

This application claims priority to Chinese Patent Application No. 202011003878.2, filed with the China National Intellectual Property Administration on September 22, 2020 and entitled "COIL ASSEMBLY, ELECTRONIC DEVICE, AND WIRELESS CHARGER", which is incorporated herein by reference in its entirety.

### TECHNICAL FIELD

This application relates to the field of wireless charging technologies, and in particular, to a coil assembly, an electronic device, and a wireless charger.

### BACKGROUND

In a wireless charging technology, an electronic device and a wireless charger do not need to be connected to each other by using a power cable, and the electronic device can be charged by placing the electronic device on the wireless charger, to facilitate use by a user. In addition, a contact terminal configured to connect to a power cable may be further omitted from the electronic device, so that safety and waterproof and dustproof performance of the electronic device can be improved. Therefore, in recent years, charging an electronic device by using the wireless charging technology becomes highly recommended.

In wireless charging, charging efficiency is a key parameter that affects user experience. With same input power, when charging efficiency is higher, a charging adapter can output more power, so that an electronic device such as a mobile phone can be quickly charged, thereby reducing charging time and improving user experience.

On an energy transmission link, a transmitting coil and a receiving coil are key components for completing transmission of electric energy from a wireless charger to an electronic device such as a mobile phone. Therefore, a coil coupling system is a core design of wireless charging, and advantages and disadvantages of a coil design severely affect wireless charging efficiency, and as a result user experience is affected.

### SUMMARY

This application provides a coil assembly, an electronic device, and a wireless charger, to improve charging efficiency between the electronic device and the wireless charger.

According to a first aspect, this application provides a coil assembly. The coil assembly includes a winding unit. The winding unit includes a first coil winding, a second coil winding, and a circuit board. The first coil winding has a first connection end and a first lead-out end, and the first lead-out end is configured to connect to an external circuit. In addition, the first coil winding includes a plurality of first wire groups, and the plurality of first wire groups are disposed side by side. Similarly, the second coil winding has a second connection end and a second lead-out end, and the second lead-out end is configured to connect to the external circuit. The second coil winding includes a plurality of second wire groups, and the plurality of second wire groups are disposed side by side. The circuit board may be used as a medium for connecting the first coil winding and the second coil winding. The circuit board includes a plurality of line layers and a plurality of first vias. A plurality of first terminals and a plurality of second terminals are disposed on the plurality of line layers. The first terminal is connected to the second terminal by using a cable, and in a plurality of cables used to connect the plurality of first terminals and the plurality of second terminals, at least two of the cables are changed to different line layers in a cross region through the first vias to be disposed in a crossed manner. In this application, the first vias are opened in the circuit board, to allow at least two of the cables to be changed to different line layers in a cross region through the first vias to be disposed in a crossed manner, so that cables on the circuit board are disposed clearly and neatly, and a contact short circuit between cables can be avoided.

When the first coil winding is connected to the circuit board, some of the first wire groups of the first coil winding that are located at the first connection end may be fastened to the first terminals. When the second coil winding is connected to the circuit board, some of the second wire groups that are located at the second connection end may be fastened to the second terminal. In addition, at least two of the first wire groups are connected to at least two of the second wire groups by cables that are disposed in a crossed manner.

According to the coil assembly in embodiments of this application, at least two of the first wire groups of the first coil winding are connected to at least two of the second wire groups of the second coil winding by cables that are disposed in a crossed manner, directions of magnetic fields formed when a current passes through the first coil winding and the second coil winding are opposite at the at least two first wire groups and the at least two second wire groups. Therefore, a magnetic flux in a gap between the at least two first wire groups and a magnetic flux in a gap between the at least two second wire groups can cancel each other, thereby reducing generation of circulating currents in coil gaps of the first coil winding and the second coil winding, and further effectively reducing extra heat generation of the coil windings, which helps improve transmission efficiency of electric energy of the coil assembly.

In a possible implementation of this application, a quantity of first wire groups is the same as a quantity of second wire groups. In addition, the first wire groups may be connected to the second wire groups in a one-to-one correspondence, but this application is not limited thereto. In this way, all first wire groups of the first coil winding and all second wire groups of the second coil winding can be used for transmitting electric energy, thereby improving transmission efficiency of electric energy of the coil windings.

In a possible implementation of this application, when the first wire groups are specifically disposed, the plurality of first wire groups may have a same quantity of wires. Alternatively, at least two first wire groups of the plurality of first wire groups may have different quantities of wires. For example, each of the plurality of first wire groups may have a different quantity of wires.

Similarly, when the second wire groups are specifically disposed, the plurality of second wire groups may have a same quantity of wires. Alternatively, at least two second wire groups of the plurality of second wire groups may have different quantities of wires. For example, each of the plurality of second wire groups may have a different quantity of wires.

In a possible implementation of this application, the first wire group and the second wire group that are connected may have a same quantity of wires, so that the wires in the first wire group and the second wire group that are connected can be used to transmit electric energy, thereby improving transmission efficiency of electric energy. In addition, the first wire group and the second wire group that are connected may have different quantities of wires.

In a possible implementation of this application, a quantity of the plurality of first terminals is n, a quantity of the plurality of second terminals is n, a quantity of the plurality of cables is n, a quantity of the plurality of first vias is n-1, and if the n first terminals are arranged in a first direction and the n second terminals are arranged in the first direction, that the first terminal is connected to the second terminal by using a cable, and in a plurality of cables connecting the plurality of first terminals and the plurality of second terminals, at least two of the cables are changed to different line layers in a cross region through the first vias to be disposed in a crossed manner is specifically: A 1^{st} first terminal is connected to an n^{th} second terminal by using a first cable, a 2^{nd} first terminal is connected to an (n-1)^{th} second terminal by using a second cable, ..., an (n-1)^{th} first terminal is connected to a 2^{nd} second terminal by using an (n-1)^{th} cable, and an n^{th} first terminal is connected to a 1^{st} second terminal by using an n^{th} cable; and the second cable is changed to a line layer different from that of the first cable through a first via at a first position in the cross region, the (n-1)^{th} cable is changed to a line layer different from that of the first cable through a first via at an (n-2)^{th} position in the cross region, and the n^{th} cable is changed to a line layer different from that of the first cable through a first via at an (n-1)^{th} position in the cross region, where n is an integer greater than or equal to 2. In this way, it is implemented that at least two cables are disposed in a crossed manner, thereby implementing cancellation between magnetic fluxes in gaps between at least some first wire groups and magnetic fluxes in gaps between at least some second wire groups, so that generation of circulating currents in coil gaps of the first coil winding and the second coil winding can be greatly reduced.

When n is an even number, the plurality of cables used for the plurality of first terminals and the plurality of second terminals may be disposed in a pairwise crossed manner. For example, the quantity of the first terminals is 6, and the quantity of second terminals is 6. Correspondingly, that the first terminal is connected to the second terminal by using a cable, and in a plurality of cables connecting the plurality of first terminals and the plurality of second terminals, at least two of the cables are changed to different line layers in a cross region through the first vias to be disposed in a crossed manner is specifically: In a first arrangement direction, a 1^{st} first terminal is connected to a 6^{th} second terminal by using a first cable, a 2^{nd} first terminal is connected to a 5^{th} second terminal by using a second cable, a 3^{rd} first terminal is connected to a 4^{th} second terminal by using a third cable, a 4^{th} first terminal is connected to a 3^{rd} second terminal by using a fourth cable, a 5^{th} first terminal is connected to a 2^{nd} second terminal by using a fifth cable, and a 6^{th} first terminal is connected to a 1^{st} second terminal by using a sixth cable. In addition, the second cable is changed to a line layer different from that of the first cable through a first via at a first position in the cross region, the third cable is changed to a line layer different from that of the first cable through a first via at a second position in the cross region, the fourth cable is changed to a line layer different from that of the first cable through a first via at a third position in the cross region, the fifth cable is changed to a line layer different from that of the first cable through a first via at a fourth position in the cross region, and the sixth cable is changed to a line layer different from that of the first cable through a first via at a fifth position in the cross region, to avoid a contact short circuit between the cables. When the first wire groups are connected to the first terminals in a one-to-one correspondence and the second wire groups are connected to the second terminals in a one-to-one correspondence, magnetic fluxes in gaps between the plurality of first wire groups and magnetic fluxes in gaps between the plurality of second wire groups can completely cancel each other in an arrangement manner of the circuit board, so that generation of circulating currents in coil gaps of the first coil winding and the second coil winding is reduced.

When n is an odd number, there are always two cables that cannot intersect, and a magnetic flux in a gap between two first wire groups connected to the two cables that cannot intersect and a magnetic flux in a gap between two second wire groups connected to the two cables cannot cancel each other. For example, the quantity of the plurality of first terminals is 5, and the quantity of the plurality of second terminals is 5. Correspondingly, that the first terminal is connected to the second terminal by using a cable, and in a plurality of cables connecting the plurality of first terminals and the plurality of second terminals, at least two of the cables are changed to different line layers in a cross region through the first vias to be disposed in a crossed manner is specifically: In the first arrangement direction, a 1^{st} first terminal is connected to a 5^{th} second terminal by using a first cable, a 2^{nd} first terminal is connected to a 1^{st} fourth terminal by using a second cable, a 3^{rd} first terminal is connected to a 2^{nd} second terminal by using a third cable, a 4^{th} first terminal is connected to a 3^{rd} second terminal by using a fourth cable, and a 5^{th} first terminal is connected to a 1^{st} second terminal by using a fifth cable. In addition, the second cable is changed to a line layer different from that of the first cable through a first via at a first position in the cross region, the third cable is changed to a line layer different from that of the first cable through a first via at a second position in the cross region, the fourth cable is changed to a line layer different from that of the first cable through a first via at a third position in the cross region, and the fifth cable is changed to a line layer different from that of the first cable through a first via at a fourth position in the cross region, to avoid a contact short circuit between the cables. When the first wire groups are connected to the first terminals in a one-to-one correspondence and the second wire groups are connected to the second terminals in a one-to-one correspondence, magnetic fluxes in gaps between some first wire groups and magnetic fluxes in gaps between some second wire groups can cancel each other in an arrangement manner of the circuit board. However, the arrangement manner can also greatly reduce generation of circulating currents in coil gaps of the first coil winding and the second coil winding.

In a possible implementation of this application, for two cables disposed in a crossed manner, an area defined by a projection of on cable onto a first surface or a second surface of the circuit board may be close to an area defined by a projection of the other cable onto the first surface or the second surface of the circuit board. In this way, the two cables generate close magnetic inductance. In addition, because the two cables are disposed in a crossed manner, directions of magnetic fluxes in regions defined by the two cables are opposite, so that magnetic fluxes of the two parts can cancel each other.

In a possible implementation of this application, when the cables are specifically disposed, a spacing between every two adjacent cables may be equal, to avoid impact of the cables on a magnetic flux of the coil assembly. In addition, when the magnetic fluxes in the gaps between the plurality of first wire groups and the magnetic fluxes in the gaps of the plurality of second wire groups can completely cancel each other, in this case, the spacings between the cables have little impact on the magnetic flux of the coil assembly. In this case, at least two of the spacings between any two adjacent cables may be different.

In a possible implementation of this application, the plurality of cables may be wound around a surface of the circuit board, and widths of the plurality of cables are the same; or a radius of a coil formed by the cables is directly proportional to widths of the cables.

One first pad may be correspondingly disposed at each first terminal of the circuit board, and one second pad may be correspondingly disposed at each second terminal. In this way, the first wire group may be connected to the first terminals in a soldering manner, and the second wire group may be connected to the second terminals in a soldering manner, so that the connection is convenient.

In a possible implementation of this application, the first terminals and the second terminals may be disposed on a same surface of the circuit board, to connect the first coil winding and the second coil winding to the circuit board. In addition, the first terminals may be disposed on the first surface of the circuit board, and the second terminals may be disposed on the second surface of the circuit board. The first surface and the second surface are disposed opposite to each other, to facilitate arrangement of the first terminals and the second terminals.

In a possible implementation of this application, a part of each first wire group that is located at the first connection end may be further connected to a third pad. In this way, the first wire group may be electrically connected to the first terminals of the circuit board by soldering the third pad to the first pad, and a connection operation is simpler. To facilitate connection between the first coil winding and an external circuit, a fourth pad may be further disposed at the first lead-out end.

Similarly, a part of each second wire group that is located at the second connection end may be further connected to a fifth pad. In this way, the second wire group may be electrically connected to the second terminals of the circuit board by soldering the fifth pad to the second pad, and a connection operation is simpler. In addition, the second lead-out end may be further connected to a sixth pad, to facilitate connection between the second coil winding and the external circuit.

In a possible implementation of this application, the first coil winding is an independent coil winding structure, the second coil winding is an independent coil winding structure, the first connection end of the first coil winding extends in a first arrangement direction to form a first extension portion, and the second connection end of the second coil winding extends in the first arrangement direction to form a second extension portion; and a slot is opened in the circuit board, the slot is provided in a region between a projection of the first terminals onto a first surface or a second surface of the circuit board and a projection of the second terminals onto the first surface or the second surface of the circuit board, the slot is opened in the first arrangement direction, the first extension portion extends into the slot and is connected to the first terminals, the second extension portion extends into the slot and is connected to the second terminals, and the first extension portion and the second extension portion are disposed in a stacked manner at the slot. In the implementation, when the first coil winding, the second coil winding, and the circuit board are assembled, the first extension portion of the first coil winding and the second extension portion of the second coil winding may be disposed in a stacked manner at the slot of the circuit board. In this way, stacking of the first coil winding, the second coil winding, and the circuit board can be effectively avoided, thereby facilitating implementation of a thin design of the coil assembly.

In a possible implementation of this application, the first coil winding is an independent coil winding structure, the second coil winding is formed on a first surface of the circuit board, the second coil winding is formed by winding a plurality of cables, the second connection end of the second coil winding is used as the second terminals of the circuit board, the first terminals are formed after the cables continue to be wound with a trend of a decreasing winding radius and are disposed in a cross manner, and the first connection end of the first coil winding is electrically connected to the first terminals. In this arrangement manner, integration of the coil assembly can be improved, so that use of the coil assembly is convenient.

In a possible implementation of this application, the first coil winding may be formed on the first surface of the circuit board, and the second coil winding may be formed on the second surface of the circuit board. In this implementation, when the first wire group of the first coil winding is connected to the first terminals of the circuit board, a part of a first wire winding that is located at the first connection end may be connected to the first terminals through a second via at a position. Similarly, a part of the second wire group of the second coil winding that is located at the second connection end may be connected to the second terminals through a second via at another position. In this arrangement manner, integration of the coil assembly can be effectively improved, so that use of the coil assembly is convenient.

In a possible implementation of this application, the coil assembly may include a plurality of winding units, for example, two, three, or four winding units. The plurality of winding units are disposed in a stacked manner; and first lead-out ends of first coil windings of a plurality of coil units are connected to connect to the external circuit, and lead-out ends of second coil windings of the plurality of coil units are connected to connect to the external circuit, so that the plurality of winding units are disposed in parallel. By using this solution, generation of circulating currents in coil gaps of the coil windings can be reduced, thereby effectively reducing extra heat generation of the coil windings. In addition, impedance of the coil windings can be effectively reduced by connecting a plurality of winding units in parallel.

In a possible implementation of this application, the coil assembly may include a plurality of winding units, for example, two, three, or four winding units. The plurality of winding units are disposed in a stacked manner, and in two adjacent winding units, a second lead-out end of a second coil winding of one winding unit is connected to a first lead-out end of a first coil winding of the other winding unit, so that the plurality of winding units are disposed in series. According to this solution, the plurality of winding units are connected in series, so that a quantity of turns of coil of the coil assembly can be increased, and magnetic inductance of the coil assembly can be improved. This may be applied to a scenario in which a coil inductance of a coil assembly needs to be adjusted due to a voltage gain.

In addition to the foregoing structure, in a possible implementation, the coil assembly in embodiments of this application may further include a magnetic conductive sheet. A material of the magnetic conductive sheet may be but is not limited to one or more of magnetic conductive materials such as a ferrite material, an amorphous material, a nanocrystal material, and a metal powder core material. The coil units are disposed on a surface of a side of the magnetic conductive sheet, and the coil units and the magnetic conductive sheet are insulated from each other. Because the magnetic conductive sheet can play a magnetically conductive role, the magnetic conductive sheet can improve magnetic inductance of the winding unit, and can further keep a magnetic field from leaking to the other side of the magnetic conductive sheet, thereby implementing good shielding on space of the magnetic conductive sheet on a side opposite to the winding unit.

According to a second aspect, this application further provides an electronic device. The electronic device includes a powered circuit and the coil assembly in the first aspect. The coil assembly may be electrically connected to the powered circuit in the electronic device as a receiving coil of the electronic device, to convert electromagnetic energy into electric energy for storage or use.

In the electronic device in embodiments of this application, because a magnetic flux in a coil gap of the first coil winding and a magnetic flux in a coil gap of the second coil winding of each winding unit of the coil assembly can cancel each other, generation of circulating currents in the coil gaps in the winding unit can be reduced. Therefore, heat generation of the coil windings is low, and transmission efficiency of electric energy of the coil winding is improved, thereby improving charging efficiency of the electronic device.

According to a third aspect, this application further provides a wireless charger. The wireless charger includes a power supply circuit and the coil assembly in the first aspect. The coil assembly is electrically connected to the power supply circuit as a transmitting coil of the wireless charger, to convert electric energy into electromagnetic energy for wireless transmission.

In the wireless charger in embodiments of this application, because a magnetic flux in a coil gap of the first coil winding and a magnetic flux in a coil gap of the second coil winding of each winding unit of the coil assembly can cancel each other, generation of circulating currents in the coil gaps in the winding unit can be reduced. Therefore, heat generation of the coil assembly is low, and transmission efficiency of electric energy of the coil winding is improved, thereby improving charging efficiency of the wireless charger.

According to a fourth aspect, this application further provides a wireless charging system. The wireless charging system includes an electronic device and a wireless charger. At least one of the electronic device and the wireless charger includes the coil assembly in the first aspect, the electronic device and the wireless charger are disposed in contact, and the wireless charger charges the electronic device. In the wireless charging system, heat generation of the coil assembly of at least one of the wireless charger and the electronic device is low, and transmission efficiency of electric energy between the wireless charger and the electronic device is high. Therefore, charging efficiency of the wireless charging system can be effectively improved, thereby helping improve user experience for users.

### BRIEF DESCRIPTION OF DRAWINGS

FIG. 1 is a schematic diagram of a structure of a wireless charging system according to an embodiment of this application;
FIG. 2 is a schematic diagram of a structure of a wireless charger according to an embodiment of this application;
FIG. 3 is a schematic diagram of a structure of an electronic device according to an embodiment of this application;
FIG. 4 is a schematic diagram of a generation principle of an eddy current loss;
FIG. 5 is a schematic diagram of a structure of a coil assembly according to an embodiment of this application;
FIG. 6 is a schematic diagram of a structure of a first coil winding of a coil assembly according to an embodiment of this application;
FIG. 7 is an enlarged diagram of a partial structure at A of the first coil winding in FIG. 6;
FIG. 8 is a schematic diagram of a structure of a second coil winding of a coil assembly according to an embodiment of this application;
FIG. 9a is a schematic diagram of a structure of a first surface of a circuit board of a coil assembly according to an embodiment of this application;
FIG. 9b is a schematic diagram of a structure of a second surface of a circuit board of a coil assembly according to an embodiment of this application;
FIG. 10 is a schematic diagram of a magnetic flux cancellation principle of a coil assembly according to an embodiment of this application;
FIG. 11 is a schematic diagram of a structure of a coil assembly according to another embodiment of this application;
FIG. 12a is a schematic diagram of a structure of a first surface of a circuit board of a coil assembly according to another embodiment of this application;
FIG. 12b is a schematic diagram of a structure of a second surface of a circuit board of a coil assembly according to another embodiment of this application;
FIG. 13 is a schematic diagram of a structure of a first surface of a circuit board of a coil assembly according to another embodiment of this application;
FIG. 14 is a schematic diagram of a structure of a coil assembly according to another embodiment of this application;
FIG. 15 is a schematic diagram of a magnetic flux cancellation principle of a coil assembly according to another embodiment of this application;
FIG. 16 is a schematic diagram of a magnetic flux cancellation principle of a coil assembly according to another embodiment of this application;
FIG. 17 is a schematic diagram of a structure of a coil assembly according to another embodiment of this application;
FIG. 18a is a schematic diagram of a structure of a first coil winding of a coil assembly according to another embodiment of this application;
FIG. 18b is a schematic diagram of a structure of a second coil winding of a coil assembly according to another embodiment of this application;
FIG. 19a is an enlarged diagram of a partial structure at E of the first coil winding in FIG. 18a;
FIG. 19b is an enlarged diagram of a partial structure at F of the second coil winding in FIG. 18b;
FIG. 20a is a schematic diagram of a structure of a first surface of a circuit board of a coil assembly according to another embodiment of this application;
FIG. 20b is a schematic diagram of a structure of a second surface of a circuit board of a coil assembly according to another embodiment of this application;
FIG. 21 is a schematic diagram of a structure of a coil assembly according to another embodiment of this application;
FIG. 22 is a schematic diagram of a structure of a first coil winding of a coil assembly according to another embodiment of this application;
FIG. 23a is a schematic diagram of a structure of a second surface of a circuit board of a coil assembly according to another embodiment of this application;
FIG. 23b is a schematic diagram of a structure of a second surface of a circuit board of a coil assembly according to another embodiment of this application;
FIG. 24 is a schematic diagram of a structure of a coil assembly according to another embodiment of this application;
FIG. 25 is a schematic diagram of a structure of a first coil winding of a coil assembly according to another embodiment of this application;
FIG. 26 is a schematic diagram of a structure of a second coil winding of a coil assembly according to another embodiment of this application;
FIG. 27a is a schematic diagram of a structure of a second surface of a circuit board of a coil assembly according to another embodiment of this application; and
FIG. 27b is a schematic diagram of a structure of a second surface of a circuit board of a coil assembly according to another embodiment of this application.

### DESCRIPTION OF EMBODIMENTS

To make objectives, technical solutions, and advantages of this application clearer, the following further describes this application in detail with reference to the accompanying drawings. To facilitate understanding of a coil assembly provided in embodiments of this application, the following first describes an application scenario of the coil assembly.

With the great development and popularization of consumer electronic products, portable electronic products bring great convenience to people's life. However, different charging adapters need to be configured for different products. For reasons such as that different products have varied interfaces and powers of different products are incompatible, adapters of different manufacturers have poor universality. In addition, for reasons such as that a large quantity of wires are used in a wire charging manner and a cable needs to be inserted or removed during charging, convenience of use by users is greatly reduced.

With the development of science and technology, a wireless charging technology is increasingly widely applied to consumer electronic products. Compared with a conventional cable plug-in electric energy transmission technology, in a process of performing wireless electric energy transmission by using the wireless charging technology, because there is no cable connection between a power supply and a load in the wireless charging technology, the wireless charging technology is safer, more convenient, and more reliable. A manner used in the wireless charging technology to implement wireless electric energy transmission includes an electromagnetic radiation manner, an electromagnetic induction manner, an electromagnetic resonance manner, an electric field coupling manner, and the like. In consideration of efficiency and safety, a wireless charging product in the market usually uses the electromagnetic induction-based wireless electric energy transmission manner.

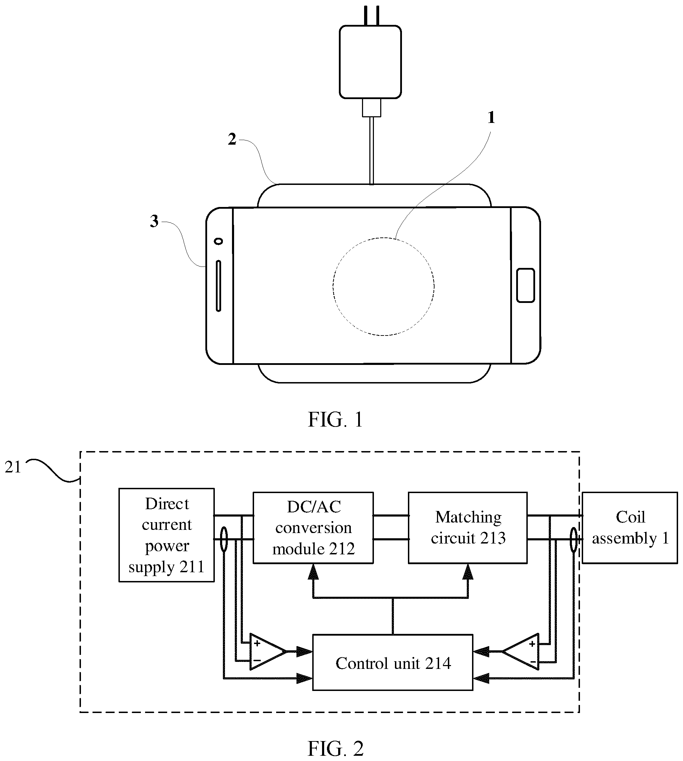

A coil assembly 1 provided in this application is designed based on the electromagnetic induction-based wireless electric energy transmission manner, and may be applied to various wireless charging systems. FIG. 1 shows a wireless charging system including a wireless charger 2 and an electronic device 3. In the wireless charging system, the wireless charger 2 is used as a power supply device, and the electronic device 3 is used as a powered device. The electronic device may be, for example, a mobile phone, a wearable device (a smartwatch, a smart band, or a pair of smart glasses), or a tablet computer.

In the embodiment shown in FIG. 1, the coil assembly 1 in this application is disposed on at least one of the wireless charger 2 and the electronic device 3. The coil assembly 1 may be used as a transmitting coil of the power supply device such as the wireless charger 2, or a receiving coil of the electronic device 3. The wireless charger 2 is connected to a power supply, and is configured to send energy of the power supply to the to-be-charged electronic device 3 through electromagnetic waves. The to-be-charged electronic device 3 is in contact with the wireless charger 2, and is configured to receive the electromagnetic waves and charge the electronic device 3 by using energy carried in the electromagnetic waves.

When the coil assembly 1 is disposed in the power supply device such as the wireless charger 2, refer to FIG. 2. FIG. 2 is a schematic diagram of a structure of the wireless charger 2 provided with the coil assembly 1 in this application. Still with reference to FIG. 2, in addition to the coil assembly 1, the wireless charger 2 may further include a power supply circuit 21. As the transmitting coil of the wireless charger 2, the coil assembly 1 is electrically connected to the power supply circuit 21 in the power supply device, to convert electric energy into electromagnetic energy for wireless transmission.

Still with reference to FIG. 2, the power supply circuit 21 of the wireless charger 2 may include a direct current/alternating current (DC/AC) conversion module 212, a matching circuit 213, and a control unit 214. In this way, when the wireless charger 2 supplies power to the powered device, the DC/AC conversion module 212 is connected to a direct current power supply 211, and converts the direct current power supply 211 into an alternating current signal. The alternating current signal flows through the matching circuit 213 and is transmitted to the coil assembly 1. The coil assembly 1 converts electric energy into electromagnetic energy for wireless transmission. In addition, the control unit 214 may control operation of the power supply circuit 21.

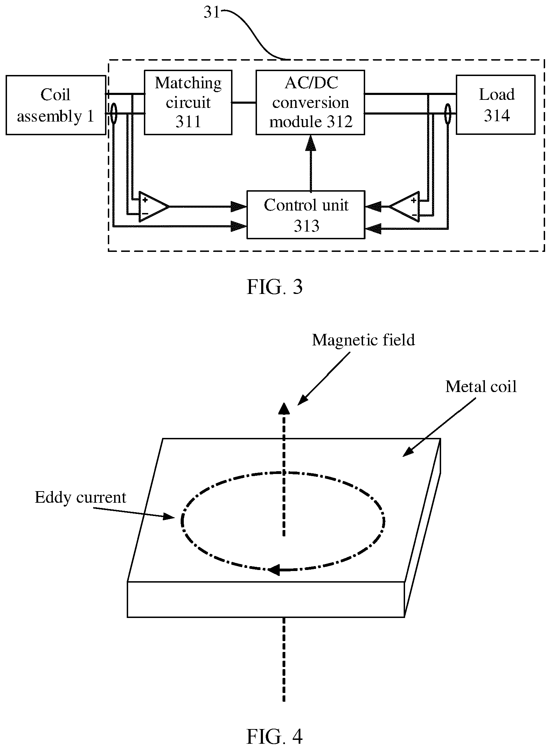

In another embodiment of this application, the coil assembly 1 is disposed in the powered device. The powered device may be, for example, an electronic device such as a mobile phone, a smartwatch, or a tablet computer. With reference to FIG. 3, as the receiving coil of the powered device, the coil assembly 1 may be electrically connected to a powered circuit 31 in the powered device, to convert electromagnetic energy into electric energy for storage or use.

Still with reference to FIG. 3, the powered circuit 31 may include a matching circuit 311, an alternating current/direct current (AC/DC) conversion module 312, a control unit 313, and a load 314. The coil assembly 1 may convert a received alternating current signal into electric energy. The electric energy is transmitted to the AC/DC conversion module 312 through the matching circuit 311. The AC/DC conversion module 312 converts the received alternating current signal into a direct current signal for storage or supplies power to the load 314. In addition, the control unit 313 may control operation of the powered circuit 31.

In the electromagnetic induction-based wireless charging technology, energy is mainly transmitted based on a magnetic coupling principle between the transmitting coil and the receiving coil. Therefore, a strong alternating current magnetic field exists between the transmitting coil and the receiving coil. As shown in FIG. 4, when a metal coil is placed in the alternating current magnetic field, an eddy current is induced, causing an eddy current loss. A magnitude of the eddy current is directly proportional to an area of the metal coil. Therefore, when the area of the metal coil is larger, the eddy current loss of the metal coil is larger in a same magnetic field. However, if the transmitting coil or the receiving coil has a large eddy current loss, wireless charging efficiency is low.

However, if the metal coil is cut into two coils whose areas are both half of the area of the original metal coil, in the same magnetic field, an eddy current generated by each small coil is reduced, so that a loss of the metal coil including the two small coils is reduced. It is verified by an experiment that the loss can be reduced to approximately 25% of the original loss. Based on this, an embodiment of this application provides a coil assembly, to reduce an eddy current loss of the coil assembly and improve charging efficiency of the coil assembly.

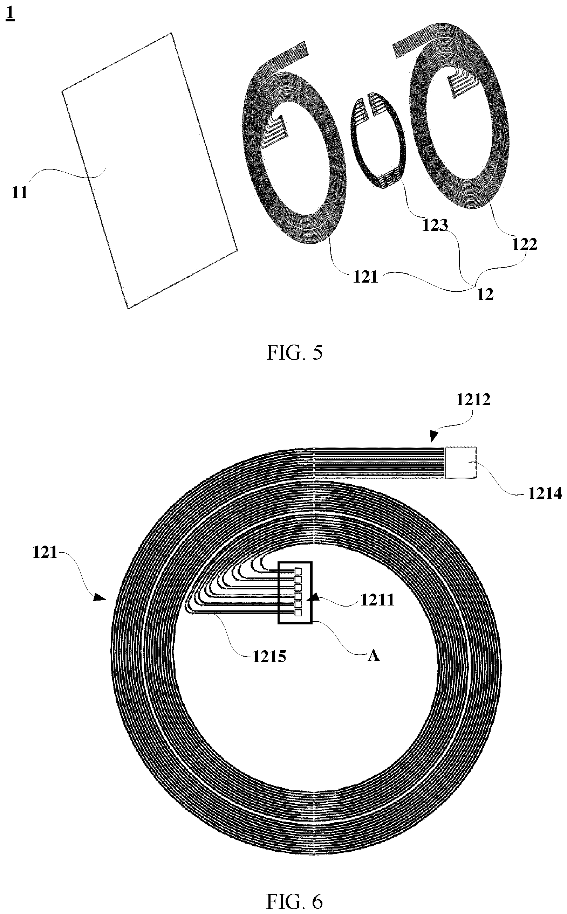

With reference to FIG. 5, the coil assembly 1 in embodiments of this application may include a magnetic conductive sheet 11 and a winding unit 12. The winding unit 12 is disposed on a surface of a side of the magnetic conductive sheet 11, and the winding unit 12 and the magnetic conductive sheet 11 are insulated from each other. Because the magnetic conductive sheet 11 can play a magnetic conductive role, the magnetic conductive sheet may improve magnetic inductance of the winding unit 12, and may further keep a magnetic field from leaking to the other side of the magnetic conductive sheet 11, thereby implementing good shielding on space, of the magnetic conductive sheet 11, that is on a side opposite to the side on which the winding unit 12 is disposed. In embodiments of this application, the magnetic conductive sheet 11 may be made of a magnetic conductive material, for example, may be a ferrite material, an amorphous material, a nanocrystal material, a metal powder core material, or the like.

Still with reference to FIG. 5, the winding unit 12 may include a first coil winding 121, a second coil winding 122, and a circuit board 123. A quantity of turns of the first coil winding 121 may be the same as or different from a quantity of turns of the second coil winding 122. In addition, areas of the first coil winding 121 and the second coil winding 122 may be the same, and the first coil winding 121 and the second coil winding 122 are disposed in a stacked manner. It may be understood that, in some embodiments of this application, the first coil winding 121 and the second coil winding 122 may alternatively be disposed opposite to each other, or may be slightly misaligned. When the first coil winding 121 is specifically disposed, refer to FIG. 6. The first coil winding 121 may be a multi-turn coil structure formed by winding a plurality of wires 1215. The wires 1215 may be, for example, metal wires. In addition, the first coil winding 121 may be a planar structure formed in a spiral winding manner (where the plurality of wires 1215 are disposed side by side, and are wound in a direction in which a winding radius increases). The shape of the first coil winding may be but is not limited to a circle, an ellipse, a polygon, or the like. In addition, a cross-sectional shape of the wire 1215 may be but is not limited to a rectangle, a circle, an ellipse, or the like, and a surface of the wire 1215 is coated with an insulating paint film, or is coated with an insulating material layer, or the like, so that every two adjacent wires 1215 of the first coil winding 121 are insulated from each other, thereby avoiding a short circuit between the wires 1215.

In embodiments of this application, in the multi-turn coil structure formed in the spiral winding manner, a start end of winding of the multi-turn coil structure is referred to as a connection end of the multi-turn coil structure, and a finish end of winding of the multi-turn coil structure is referred to as a lead-out end of the multi-turn coil structure. In some other embodiments of this application, alternatively, the start end of the winding of the multi-turn coil structure may be referred to as the lead-out end of the multi-turn coil structure, and the finish end of the winding may be referred to as the connection end of the multi-turn coil structure. This is only for distinguishing two end portions of the multi-turn coil structure. With reference to FIG. 6, in embodiments of this application, an example in which an end portion that is of the first coil winding 121 and that is disposed on an inner side of the first coil winding is referred to as a first connection end 1211, and an end portion that is of the first coil winding and that is disposed on an outer side of the first coil winding is referred to as a first lead-out end 1212 is used for description.

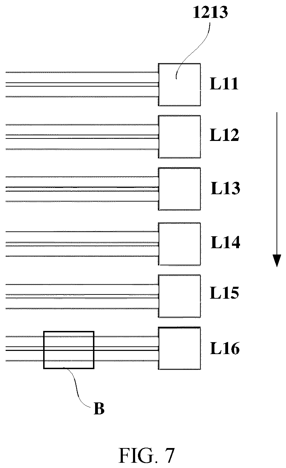

Still with reference to FIG. 6, in embodiments of this application, to implement a thin design of the first coil winding 121, a width of the wire 1215 used to wind the first coil winding 121 is small. Therefore, a large quantity of wires 1215 are used in the first coil winding 121. To facilitate connection between coil windings, with reference to FIG. 7, the plurality of wires 1215 of the first coil winding 121 may be divided into a plurality of first wire groups. Each first wire group includes at least one wire 1215. For example, as shown in B in FIG. 7, the first wire group may include two wires 1215. In addition, a quantity of the wires 1215 in each first wire group may be the same or may be different.

In an embodiment of this application, with reference to both FIG. 6 and FIG. 7, a part that is of each first wire group and that is located at the first connection end 1211 of the first coil winding 121 may be fastened to one pad 1213. When a total width of the wires 1215 fastened on each pad 1213 is smaller, a magnetic flux is smaller, and an eddy current loss formed by the wires is smaller. However, due to a limitation on a quantity of disposed pads 1213, sometimes a plurality of wires 1215 need to share one pad 1213. In this way, a total width of the wires 1215 connected to each pad 1213 increases. In this case, the wires 1215 connected to one pad 1213 need to be as close as possible, to reduce an eddy current.

In addition, the first lead-out end 1212 of the first coil winding 121 may be connected to an external circuit. When being connected to the external circuit, the first lead-out end 1212 may be fastened to a pad 1214, so that the first coil winding 121 is connected to the external circuit in a pad soldering manner. This can effectively simplify a connection between the first coil winding 121 and the external circuit, and make the connection reliable.

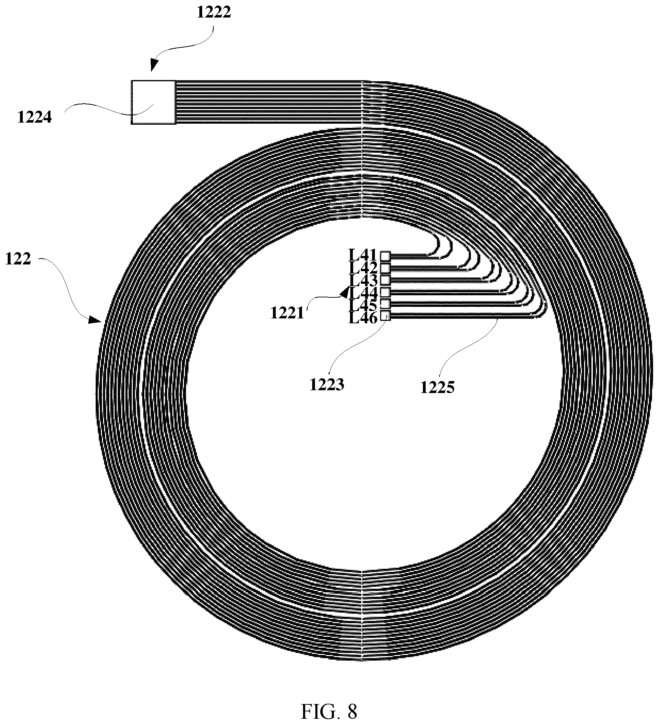

With reference to FIG. 8, when the second coil winding 122 is specifically disposed, the second coil winding 122 may alternatively be a multi-turn coil structure formed by winding a plurality of wires 1225. Similarly, the second coil winding 122 may be a planar structure formed in a spiral winding manner. The shape of the second coil winding may be but is not limited to a circle, an ellipse, a polygon, or the like. In addition, a cross-sectional shape of the wire 1225 may be but is not limited to a rectangle, a circle, an ellipse, or the like, and a surface of the wire 1225 is coated with an insulating paint film, or is coated with an insulating material layer, so that every two adjacent wires 1225 of the second coil winding 122 are insulated from each other, thereby avoiding a short circuit between the wires 1225. In addition, in embodiments of this application, an example in which an end portion that is of the second coil winding 122 and that is located on an inner side of the multi-turn coil structure is referred to as a second connection end 1221, and an end portion that is of the second coil winding and that is located on an outer side of the multi-turn coil structure is referred to as a second lead-out end 1222 is used for description.

In addition, the plurality of wires 1225 of the second coil winding 122 may alternatively be divided into at least two second wire groups at the second connection end 1221 of the second coil winding. Each second wire group includes at least one turn of coil, and a quantity of wires 1225 in each second wire group may be the same or different. Each second wire group may be fastened to one pad 1223, and the second lead-out end 1222 of the second coil winding 122 is connected to the external circuit. When being connected to the external circuit, the second lead-out end 1222 may be fastened to a pad 1224, so that the first coil winding 121 is connected to the external circuit in a pad soldering manner. This can effectively simplify a connection between the second coil winding 122 and the external circuit, and make the connection reliable.

In embodiments of this application, with reference to both FIG. 6 and FIG. 8, the first connection end 1211 of the first coil winding 121 may be electrically connected to the second connection end 1221 of the second coil winding 122. It may be understood that, when the plurality of wires 1215 of the first coil winding 121 and the plurality of wires 1225 of the second coil winding 122 are grouped, a quantity of groups of the plurality of wires 1215 of the first coil winding 121 may be the same as a quantity of groups of the plurality of wires 1225 of the second coil winding 122, or a quantity of groups of the plurality of wires 1215 of the first coil winding 121 may be different from a quantity of groups of the plurality of wires 1225 of the second coil winding 122.

In addition, when the quantity of wires in the first wire group is the same as the quantity of wires in the second wire group that are connected, the plurality of wires 1215 of the first coil winding 121 can be connected to the plurality of wires 1225 of the second coil winding 122. In some other embodiments, the first wire group and the second wire group that are connected may have different quantities of wires.

In addition, with reference to FIG. 6 and FIG. 8 together, when the first connection end 1211 of the first coil winding 121 is connected to the second connection end 1221 of the second coil winding 122, the first lead-out end 1212 of the first coil winding 121 may be connected to the external circuit as an input end, and the second lead-out end 1222 of the second coil winding 122 may be connected to the external circuit as an output end. Alternatively, the first lead-out end 1212 of the first coil winding 121 may be connected to the external circuit as an output end, and the second lead-out end 1222 of the second coil winding 122 may be connected to the external circuit as an input end.

With reference to FIG. 5, the circuit board 123 of the coil assembly 1 in embodiments of this application may be but is not limited to a printed circuit board (printed circuit board, PCB) or a flexible printed circuit (flexible printed circuit, FPC). The circuit board 123 may be used as a medium for connection between the first coil winding 121 and the second coil winding 122.

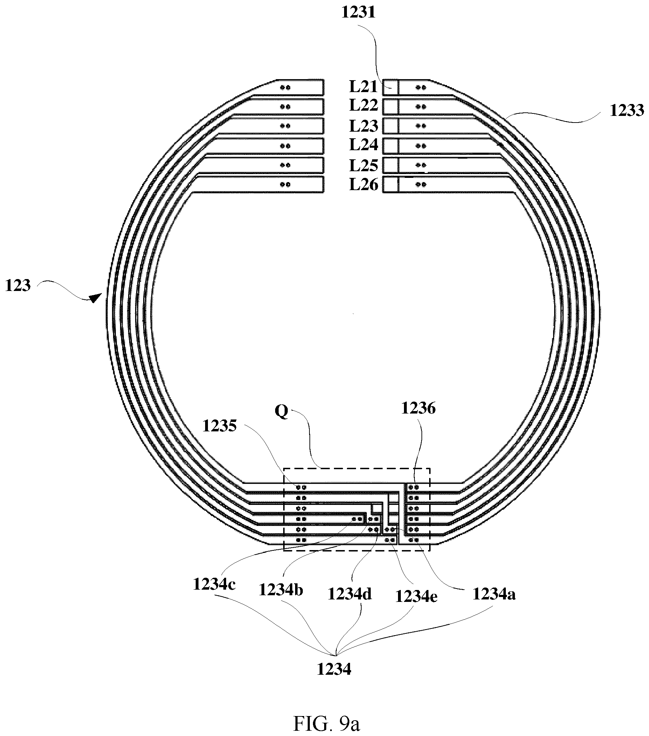

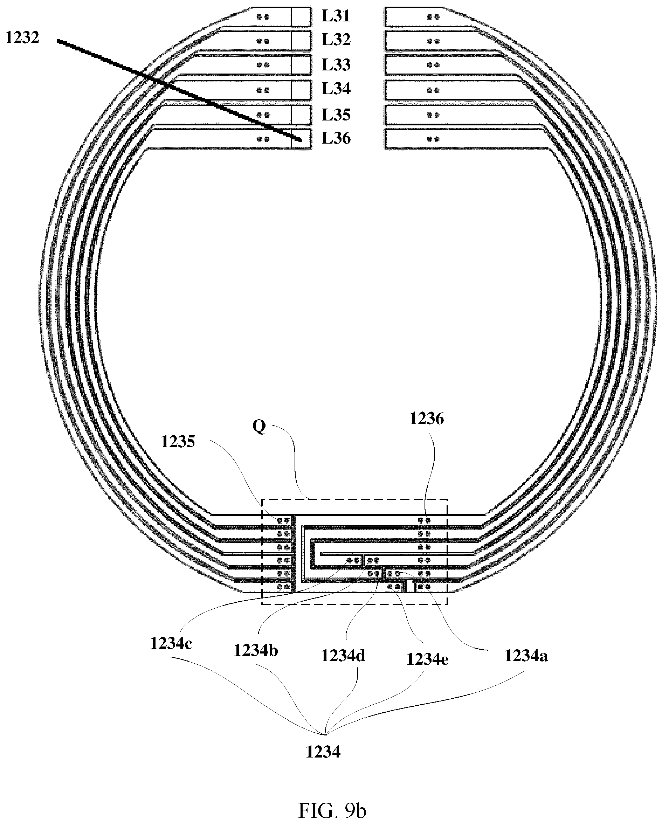

When the circuit board 123 is specifically disposed, the circuit board 123 includes a plurality of line layers, and the circuit board 123 may be disposed in a stacked manner with the first coil winding 121 and the second coil winding 122. In addition, when holes in the middle of the first coil winding 121 and the second coil winding 122 are large enough, the circuit board 123 may be disposed in regions of the holes in the middle of the first coil winding 121 and the second coil winding 122. A plurality of first terminals are disposed on the circuit board 123. With reference to FIG. 9a, one pad 1231 may be disposed at each first terminal. In addition, with reference to FIG. 9b, a plurality of second terminals are further disposed on the circuit board 123, and one pad 1232 may be disposed at each second terminal. FIG. 9a is a schematic diagram of a structure of a first surface of a circuit board, and FIG. 9b is a schematic diagram of a structure of a second surface of the circuit board. The first surface and the second surface may be two surfaces opposite to each other of the circuit board. In embodiments of this application, the pads 1231 and the pads 1232 may be connected by cables 1233.

With reference to FIG. 6 and FIG. 8, when the plurality of wires 1215 of the first coil winding 121 and the plurality of wires 1225 of the second coil winding 122 are grouped, each first wire group of the first coil winding 121 may be connected to one pad 1231 shown in FIG. 9a, and each second wire group of the second coil winding 122 is connected to one pad 1232 shown in FIG. 9b. It may be understood that, in embodiments of this application, after being connected to one pad 1231, each first wire group of the first coil winding 121 may be connected to one second wire group of the second coil winding 122 by using the pad 1232 connected to the pad 1231, to implement connection between the first coil winding 121 and the second coil winding 122.

In addition, when a part that is of each first wire group of the first coil winding 121 and that is located at the first connection end 1211 is connected to the pad 1213 and a part that is of each second wire group of the second coil winding 122 and that is located at the second connection end 1221 is connected to the pad 1223, each pad 1213 may be correspondingly soldered to one pad 1231, and each pad 1223 at the second connection end 1221 of the second coil winding 122 may be correspondingly soldered to one pad 1232, so that a process of connecting the first coil winding 121, the second coil winding 122, and the circuit board 123 is simplified, thereby improving production efficiency of the coil assembly 1.

For each coil winding, when alternating current is supplied to the coil winding, an alternating flux generated by the coil winding generates an unnecessary circulating current in a gap between two adjacent coils, thereby increasing heat generation of the coil winding, and further reducing transmission efficiency of electric energy. To resolve this problem, in an embodiment of this application, a staggered connection structure may be formed between a plurality of first wire groups of the first coil winding 121 shown in FIG. 6 and a plurality of second wire groups of the second coil winding 122 shown in FIG. 8. The staggered connection between the wire groups of the two coil windings means that in a first arrangement direction, the first wire group that is of the first coil winding 121 and that is located at a first position is connected to the second wire group that is of the second coil winding 122 and that is located at a second position, and the first position is different from the second position. In addition, it should be noted that, in this application, the first arrangement direction is one of arrangement directions when a plurality of wires are disposed side by side. It may be understood that, when the plurality of first wire groups and the plurality of second wire groups are connected in a crossed manner, at least two of connecting wires used to connect the plurality of first wire groups and the plurality of second wire groups are disposed in a crossed manner.

To facilitate understanding of the staggered connection between the plurality of first wire groups of the first coil winding 121 and the plurality of second wire groups of the second coil winding 122, an example in which the turns of coils of the plurality of wires 1215 of the first coil winding 121 may be divided into six first wire groups, and the plurality of wires 1225 of the second coil winding 122 are divided into six second wire groups is used for description.

Specifically, the plurality of wires 1215 of the first coil winding 121 are divided in the first arrangement direction (a direction shown by an arrow in FIG. 7) into six first wire groups shown in FIG. 6, and a part that is of each first wire group and that is located at the first connection end 1211 is connected to one pad 1213. With reference to FIG. 7, the plurality of pads 1213 are sequentially marked as L11, L12, L13, L14, L15, and L16 in the first arrangement direction.

Similarly, the plurality of wires 1225 of the second coil winding 122 are divided into six second wire groups shown in FIG. 8 in the first arrangement direction, and a part of each second wire group that is located at the second connection end 1221 is connected to one pad 1223. The plurality of pads 1223 are sequentially marked as L41, L42, L43, L44, L45, and L46 in the first arrangement direction. The pad 1213 marked as L11 is connected to the pad 1223 marked as L46, the pad 1213 marked as L12 is connected to the pad 1223 marked as L45, the pad 1213 marked as L13 is connected to the pad 1223 marked as L44, the pad 1213 marked as L14 is connected to the pad 1223 marked as L43, the pad 1213 marked as L15 is connected to the pad 1223 marked as L42, and the pad 1213 marked as L16 is connected to the pad 1223 marked as L41. In this way, the plurality of first wire groups of the first coil winding 121 are connected to the plurality of second wire groups of the second coil winding 122 in a staggered manner. In addition, in this embodiment, the plurality of connecting wires used to connect the plurality of second wire groups and the plurality of first wire groups are disposed in a pairwise crossed manner, so that magnetic fluxes in gaps between the plurality of first wire groups and magnetic fluxes in gaps between the plurality of second wire groups cancel each other, to reduce generation of a circulating current in a coil gap between the two coil windings, thereby effectively reducing extra heat generation of the coil windings.

It may be understood that the foregoing corresponding connection relationships between the plurality of pads 1213 and the plurality of pads 1223 are merely example descriptions of this application. In another embodiment of this application, a corresponding connection relationship between the plurality of pads 1213 and the plurality of pads 1223 may be different from that in the foregoing embodiment, provided that the at least two first wire groups of the first coil winding 121 and the at least two second wire groups of the second coil winding 122 can be connected in a staggered manner.

To implement staggered connection between the plurality of first wire groups of the first coil winding 121 and the plurality of second wire groups of the second coil winding 122, in a possible embodiment of this application, when the circuit board 123 is specifically disposed, with reference to FIG. 9a, the plurality of pads 1231 may be disposed on the first surface of the circuit board 123. In addition, with reference to FIG. 9b, a plurality of pads 1232 may be disposed on the second surface of the circuit board 123.

In this embodiment, each pad 1231 may be connected to each pad 1232 by one cable 1233, so that at least two of the plurality of cables 1233 may be respectively changed to different layers in a cross region Q of the circuit board 123 shown in FIG. 9a or FIG. 9b through vias 1234 at different positions of a line layer of the circuit board 123 to be disposed in a crossed manner, to implement staggered connection between the pads 1231 and the pads 1232. The shape of the via 1234 may be, but is not limited to, a strip-shaped hole, an arc-shaped hole, a wavy hole, a comb-shaped hole, or the like.

It may be understood that, in this embodiment, when n first terminals and n second terminals are used, n cables are used to connect the n first terminals and the n second terminals. In this case, with reference to FIG. 9a, when the n cables are disposed in a crossed manner, one of the cables may be not changed to a different layer, and the other n-1 cables are changed, through vias at n-1 positions, to line layers different from the layer in which the cable is kept to be disposed in a crossed manner, thereby avoiding a contact short circuit between the cables. The n first terminals may be arranged in a first direction, and the n second terminals may be arranged in the first direction. That the first terminal is connected to the second terminal by using a cable, and in a plurality of cables connecting the plurality of first terminals and the plurality of second terminals, at least two of the cables are changed to different line layers in a cross region Q through vias to be disposed in a crossed manner is specifically: A 1^{st} first terminal is connected to an n^{th} second terminal by using a first cable, a 2^{nd} first terminal is connected to an (n-1)^{th} second terminal by using a second cable, ..., an (n-1)^{th} first terminal is connected to a 2^{nd} second terminal by using an (n-1)^{th} cable, and an n^{th} first terminal is connected to a 1^{st} second terminal by using an n^{th} cable. In addition, the second cable is changed to a line layer different from that of the first cable through a via at a first position in the cross region Q, the (n-1)^{th} cable is changed to a line layer different from that of the first cable through a via at an (n-2)^{th} position in the cross region Q, and the n^{th} cable is changed to a line layer different from that of the first cable through a first via at an (n-1)^{th} position in the cross region Q, where n is an integer greater than or equal to 2.

To facilitate understanding of that the plurality of cables 1233 connecting the n first terminals and the n second terminals are changed to different line layers through the vias 1234 in the cross region Q to be disposed in a crossed manner, with reference to FIG. 9a and FIG. 9b, an example in which six first terminals and six second terminals are used, each first terminal is connected to one pad 1231, and each second terminal is connected to one pad 1232 is used for description. With reference to FIG. 9a, six cables 1233 used to connect the six pads 1231 and the six pads 1232 are sequentially marked as L21, L22, L23, L24, L25, and L26 in the first arrangement direction. The 1^{st} pad 1231 is connected to the 6^{th} pad 1232 by using the cable 1233 marked as L21. The 2^{nd} pad 1231 is connected to the 5^{th} pad 1232 by using the cable 1233 marked as L22. The 3^{rd} pad 1231 is connected to the 4^{th} pad 1232 by using the cable 1233 marked as L23. The 4^{th} pad 1231 is connected to the 3^{rd} pad 1232 by using the cable 1233 marked as L24. The 5^{th} pad 1231 is connected to the 2^{nd} pad 1232 by using the cable 1233 marked as L25. The 6^{th} pad 1231 is connected to the 1^{st} pad 1232 by using the cable 1233 marked as L26. In addition, the cable 1233 marked as L21 is not changed to a different layer in the cross region Q. With reference to FIG. 9a and FIG. 9b together, the cable 1233 marked as L22 is changed to a line layer different from the cable 1233 marked as L21 through a via 1234a at the first position in the cross region Q, the cable 1233 marked as L23 is changed to a line layer different from the cable 1233 marked as L21 through a via 1234b at the second position in the cross region Q, the cable 1233 marked as L24 is changed to a line layer different from the cable 1233 marked as L21 through a via 1234c at the third position in the cross region Q, the cable 1233 marked as L25 is changed to a line layer different from the cable 1233 marked as L21 through a via 1234d at the fourth position in the cross region Q, and the cable 1233 marked as L26 is changed to a line layer different from the cable 1233 marked as L21 through a via 1234e at the fifth position in the cross region Q, thereby avoiding a contact short circuit between the cables 1233.

It may be understood that, after layers are changed through corresponding vias, the plurality of cables 1233 in FIG. 9a may be electrically connected to cables at corresponding positions on the line layer shown in FIG. 9b. In addition, the layer changing manner of the cables 1233 is merely an example for description provided in an embodiment of this application. In some other embodiments of this application, the cables 1233 may alternatively be changed to different layers through vias 1235 at a plurality of positions that are provided in the first arrangement direction or vias 1236 at a plurality of positions that are provided in the first arrangement direction in the cross region Q shown in FIG. 9a and FIG. 9b, or are electrically connected to cables in other layer structures of the circuit board 123.

In addition, the cables 1233 that are used to connect the pads 1231 and the pads 1232 may alternatively be wound in a ring shape on the first surface and the second surface of the circuit board 123. For two cables 1233 disposed in a crossed manner, an area defined by a projection of one cable 1233 onto the first surface or the second surface of the circuit board 123 may be close to an area defined by a projection of the other cable 1233 onto the first surface or the second surface of the circuit board 123. In this way, the two cables 1233 generate close magnetic inductance. In addition, because the two cables 1233 are disposed in a crossed manner, directions of magnetic fluxes in regions defined by the two cables 1233 are opposite, so that magnetic fluxes of the two parts can cancel each other. In this way, the cables 1233 of the circuit board 123 are kept from affecting a magnetic flux of the coil assembly 1.

It should be noted that areas of the two being close means that the areas of the two are similar or a difference between the areas of the two is less than an area threshold. The area threshold is a small value.

In this embodiment, with reference to FIG. 6, FIG. 8, FIG. 9a, and FIG. 9b, when the first coil winding 121 and the second coil winding 122 are respectively connected to the circuit board 123, the plurality of pads 1213 of the first coil winding 121 may be soldered in a one-to-one correspondence to a same quantity of pads 1231, and the plurality of pads 1223 of the second coil winding 122 may be soldered in a one-to-one correspondence to a same quantity of pads 1232. It may be understood that, after one pad 1213 of the first coil winding 121 is connected to one pad 1231, one pad 1232 may be connected to one pad 1223 of the second coil winding 122. In this way, when the plurality of first wire groups of the first coil winding 121 are connected to the plurality of second wire groups of the second coil winding 122, a process of confirming a connection relationship between the plurality of first wire groups and the plurality of second wire groups can be reduced, thereby effectively simplifying an interconnection process of the first coil winding 121 and the second coil winding 122.

In addition, to further simplify a process of connecting the first coil winding 121 and the second coil winding 122 to the circuit board 123, the pads 1213 of the first coil winding 121, the pads 1223 of the second coil winding 122, and the pads 1231 and the pads 1232 on the circuit board 123 may have the same quantity, and have the same arrangement direction.

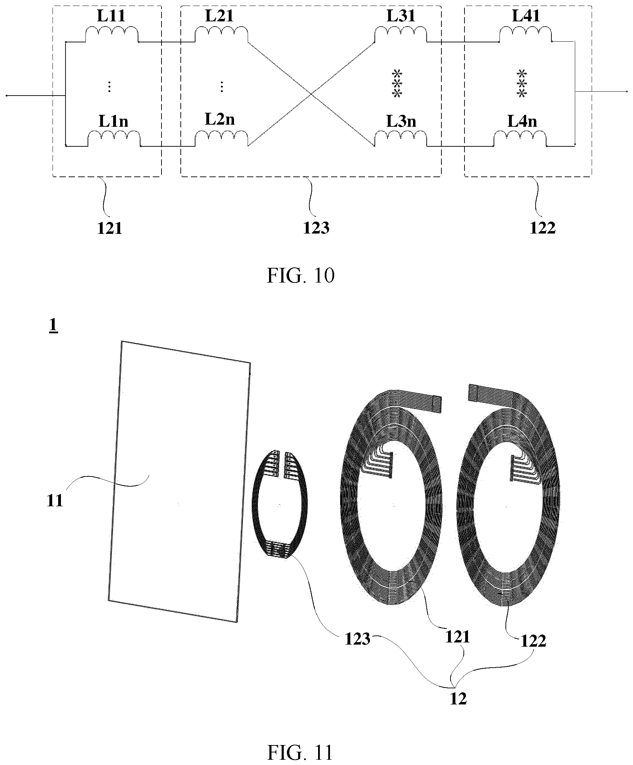

With reference to FIG. 10, a cancellation principle of magnetic fluxes in gaps of the first coil winding 121 and the second coil winding 122 is as follows: The winding unit including the first coil winding 121, the second coil winding 122, and the circuit board 123 has four inductor structures, which are respectively a plurality of first wire groups (represented by L 11, ..., and L1n respectively) formed after the first coil winding 121 is grouped, a plurality of cables (represented by L21, ..., and L2n respectively) that are on the first surface of the circuit board 123 and that are respectively connected to the plurality of pads 1231, a plurality of cables (represented by L31, ..., and L3n respectively) that are on the second surface and that are respectively connected to the plurality of pads 1232, and a plurality of second wire groups (represented by L41, ..., L4n respectively) formed after the second coil windings 122 are grouped.

Still with reference to FIG. 10, at least two of the plurality of cables 1233 that are on the circuit board 123 and that are used to connect the pads 1231 and the pads 1232 are disposed in a crossed manner. For example, the cable L21 is connected to the cable L3n, and the cable L2n is connected to the cable L31, so that the cables form a pairwise cross structure. In this case, the first wire group L11 and the cable L21 may be connected in series, and the cable L31 and the second wire group L11 may be connected in series. Similarly, the first wire group L1n and the cable L2n may be connected in series, and the cable L3n and the second wire group L4n may be connected in series. In this way, the plurality of first wire groups of the first coil winding 121 are connected to the plurality of second wire groups of the second coil winding 122 by using the circuit board 123 in a staggered manner. In FIG. 10, "." and "*" respectively represent directions in which magnetic fluxes pass through the foregoing four inductor structures, and"." and "*" respectively represent two opposite directions, so that magnetic fluxes in the gaps between the plurality of first wire groups of the first coil winding 121 and magnetic fluxes in the gaps between the plurality of second wire groups of the second coil winding 122 cancel each other, to reduce generation of circulating currents in coil gaps of the two coil windings, thereby effectively reducing extra heat generation of the coil windings.

In addition, FIG. 10 shows an arrangement manner in which the n first wire groups of the first coil winding 121 are connected to the n second wire groups of the second coil winding 122 in a staggered manner. In this embodiment, n may be an even number, to implement a pairwise cross arrangement for connecting the plurality of cables of the first wire groups and the second wire groups, so that the magnetic fluxes in the gaps between the first wire groups of the first coil winding 121 and the magnetic fluxes in the gaps between the second wire groups of the second coil winding 122 are completely canceled, to implement a zero circulating current structure of the two coil windings.

When n is an odd number, a magnetic flux in a gap between one first wire group and one second wire group cannot be canceled. However, when n is large enough (n > 4), even if a magnetic flux of only one group of wire groups is not canceled, when magnetic fluxes of most wire groups can cancel each other, the heat generation of the coil winding can still be effectively reduced, thereby improving transmission efficiency of electric energy. In this embodiment, when the circuit board is specifically disposed, an example in which five first terminals and five second terminals are used may be used to describe a connection manner between the first terminals and the second terminals when n is an odd number. In this case, refer to FIG. 9a and FIG. 9b. Because FIG. 9a and FIG. 9b show a connection manner of six first terminals and six second terminals, when five first terminals and five second terminals are used, refer to the arrangement of some cables. Specifically, each first terminal may be connected to one pad 1231, and each second terminal may be connected to one pad 1232. With reference to FIG. 9a, five cables 1233 used to connect five pads 1231 and five pads 1232 are sequentially marked as L21, L22, L23, L24, and L25 in the first arrangement direction. The 1^{st} pad 1231 is connected to the 5^{th} pad 1232 by using the cable 1233 marked as L21, and the 2^{nd} pad 1231 is connected to the 4^{th} pad 1232 by using the cable 1233 marked as L22, the 3^{rd} pad 1231 is connected to the 2^{nd} pad 1232 by using the cable 1233 marked as L23, the 4^{th} pad 1231 is connected to the 3^{rd} pad 1232 by using the cable 1233 marked as L24, and the 5^{th} pad 1231 is connected to the 1^{st} pad 1232 by using the cable 1233 marked as L25. In addition, the cable 1233 marked as L21 is not changed to a different layer in the cross region Q. With reference to FIG. 9a and FIG. 9b together, the cable 1233 marked as L22 is changed to a line layer different from the cable 1233 marked as L21 through a via 1234a at the first position in the cross region Q, the cable 1233 marked as L23 is changed to a line layer different from the cable 1233 marked as L21 through a via 1234b at the second position in the cross region Q, the cable 1233 marked as L24 is changed to a line layer different from the cable 1233 marked as L21 through a via 1234c at the third position in the cross region Q, and the cable 1233 marked as L25 is changed to a line layer different from the cable 1233 marked as L21 through a via 1234d at the fourth position in the cross region Q, thereby avoiding a contact short circuit between the cables 1233.

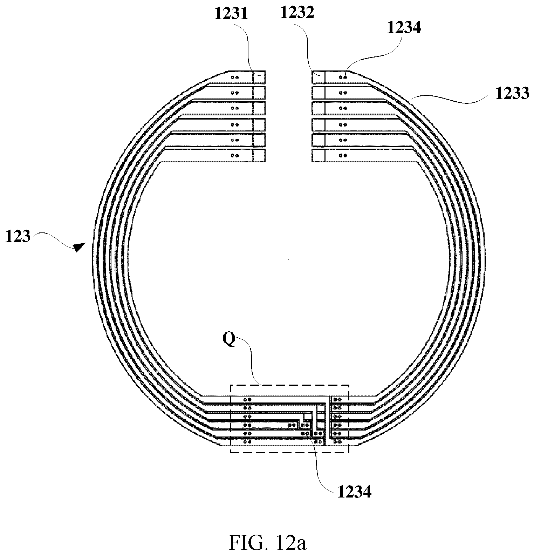

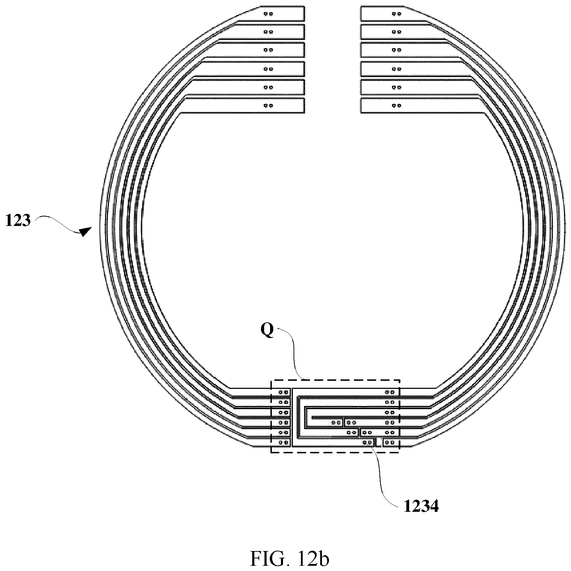

When the first coil winding 121 and the second coil winding 122 are connected in a staggered manner, with reference to FIG. 11, FIG. 12a, and FIG. 12b together, for the circuit board 123 of the winding unit 12 in embodiments of this application, apart from the arrangement manner in the foregoing embodiment, alternatively, the pads 1231 and the pads 1232 may be disposed on a surface of a same-layer structure of the circuit board 123. The pads used for the first coil winding 121 and the second coil winding 122 on the circuit board 123 are all distributed on the same surface of the circuit board 123. In this way, a soldering process between the first coil winding 121 and the second coil winding 122 and the circuit board 123 can be effectively simplified, thereby improving production efficiency.

In this embodiment, with reference to FIG. 12a and FIG. 12b, the circuit board 123 may include a plurality of line layers. In this way, the plurality of cables 1233 used to connect the pads 1231 and the pads 1232 may be changed to different line layers through the vias 1234 provided in the cross region Q of the circuit board 123 shown in FIG. 12a or FIG. 12b to implement crossing, thereby implementing staggered connection between the pads 1231 and the pads 1232. For details about that the plurality of cables 1233 are changed to different line layers through the vias 1234 in the cross region Q, refer to the embodiments shown in FIG. 9a and FIG. 9b. Details are not described herein again. In addition, the cables 1233 that are used to connect the pads 1231 and the pads 1232 may alternatively be wound in a ring shape on the first surface and the second surface of the circuit board 123, but this application is not limited thereto. In addition, for two cables 1233 disposed in a crossed manner, an area defined by a projection of one cable 1233 onto the first surface or the second surface of the circuit board 123 may be close to an area defined by a projection of the other cable 1233 onto the first surface or the second surface of the circuit board 123. In this way, the two cables 1233 generate close magnetic inductance. In addition, because the two cables 1233 are disposed in a crossed manner, directions of magnetic fluxes in regions defined by the two cables 1233 are opposite, so that magnetic fluxes of the two parts can cancel each other.

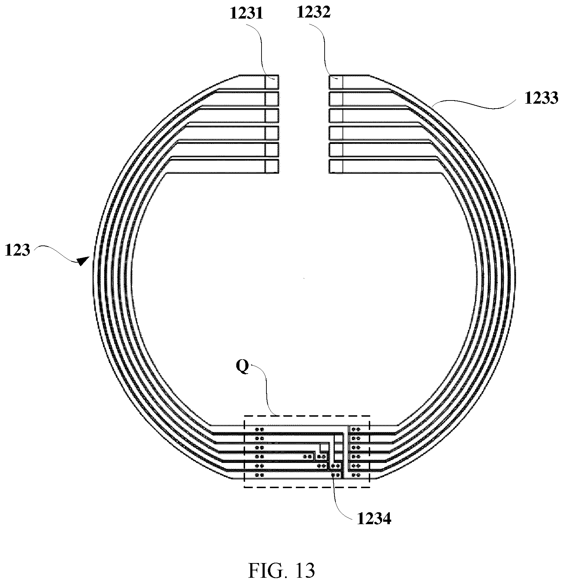

With reference to FIG. 13, in some embodiments of this application, the pads 1231 and the pads 1232 may be further disposed on a surface of a same side of the circuit board 123, and the plurality of cables 1233 used to connect the pads 1231 and the pads 1232 may be changed to different line layers through the vias 1234 provided in the cross region Q of the circuit board 123 to implement crossing, thereby implementing staggered connection between the pads 1231 and the pads 1232.

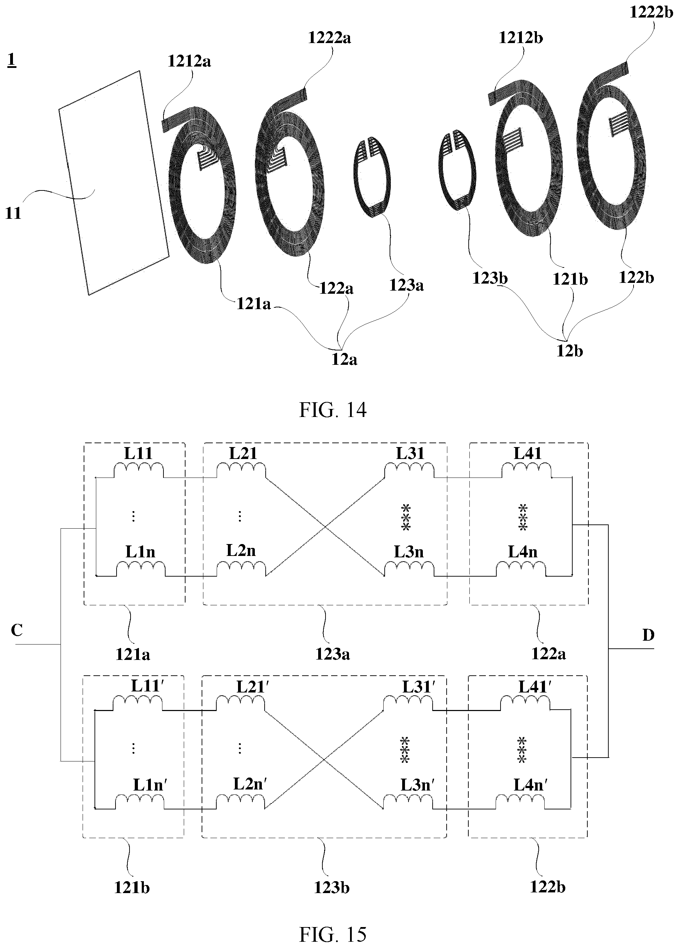

With reference to FIG. 14, in some embodiments of this application, two winding units 12 of the coil assembly 1 are used, and are respectively a winding unit 12a and a winding unit 12b. The winding unit 12a includes a first coil winding 121a, a second coil winding 122a, and a circuit board 123a. The winding unit 12b includes a first coil winding 121b, a second coil winding 122b, and a circuit board 123b.

The plurality of first wire groups of the first coil winding 121a are connected to the plurality of second wire groups of the second coil winding 122a by using the circuit board 123a in a staggered manner. The plurality of first wire groups of the first coil winding 121b are connected to the plurality of second wire groups of the second coil winding 122b by using the circuit board 123b in a staggered manner. In this embodiment, during specific arrangement, the circuit board 123a and the circuit board 123b may be disposed with reference to the embodiments shown in FIG. 9a and FIG. 9b, or disposed with reference to the embodiments shown in FIG. 12a and FIG. 12b, or disposed with reference to the embodiment shown in FIG. 13, and details are not described herein again. Certainly, based on the arrangement manner of the circuit board 123 provided in the foregoing embodiments, some variations made to the specific arrangement of the circuit board 123 fall within the protection scope of this application.

In addition, the circuit board 123a and the circuit board 123b may be disposed in a same manner or different manners, provided that the plurality of first wire groups of the first coil winding 121a and the plurality of second wire groups of the second coil winding 122a can be connected by using the circuit board 123a in a staggered manner, so that the plurality of first wire groups of the first coil winding 121b are connected to the plurality of second wire groups of the second coil winding 122b by using the circuit board 123b in a staggered manner.

In embodiments of this application, a first lead-out end 1212a of the first coil winding 121a is electrically connected to a first lead-out end 1212b of the first coil winding 121b to form a terminal C connected to an external circuit, and a second lead-out end 1222a of the second coil winding 122a is electrically connected to a second lead-out end 1222b of the second coil winding 122b to form a terminal D connected to the external circuit. Therefore, the winding unit 12a that includes a structure formed by connecting the first coil winding 121a and the second coil winding 122a by using the circuit board 123a in a staggered manner is connected in parallel to the winding unit 12b that includes a structure formed by connecting the second coil winding 122b and the second coil winding 122b by using the circuit board 123b in a staggered manner.

With reference to FIG. 15 together, in this embodiment, a plurality of first wire groups (represented by L11, ..., and L1n respectively) of the first coil winding 121a and a plurality of second wire groups (represented by L41, ..., and L4n respectively) of the second coil winding 122a can be connected by using the circuit board 123a in a staggered manner. A plurality of cables on the first surface of the circuit board 123a are respectively represented by L21, ..., and L2n, and a plurality of cables on the second surface of the circuit board 123a are respectively represented by L31, ..., and L3n. In addition, a plurality of first wire groups (represented by L11', ..., and L1n' respectively) of the first coil winding 121b and a plurality of second wire groups (represented by L41', ..., and L4n' respectively) of the second coil winding 122b are connected by using the circuit board 123b in a staggered manner. A plurality of cables on the first surface of the circuit board 123b are respectively represented by L21', ..., and L2n', and a plurality of cables on the second surface of the circuit board 123b are respectively represented by L31', ..., and L3n'.

In FIG. 15, "." and "*" respectively represent directions of magnetic fluxes, and "." and "*" respectively represent two opposite directions. By using this solution, magnetic fluxes in the gaps between the first wire groups of the first coil winding 121a and magnetic fluxes in the gaps between the second wire groups of the second coil winding 122a can cancel each other, so that the magnetic fluxes in the gaps between the first wire groups of the first coil winding 121b and the magnetic fluxes in the gaps between the second wire groups of the second coil winding 122b cancel each other, to reduce generation of circulating currents in coil gaps of the coil windings, thereby effectively reducing extra heat generation of the coil windings.

In addition, the winding unit 12 that includes the structure formed by connecting the first coil winding 121a and the second coil winding 122a by using the circuit board 123a in a staggered manner is connected in parallel to the winding unit 12 that includes the structure formed by connecting the second coil winding 122b and the second coil winding 122b by using the circuit board 123b in a staggered manner, so that impedance of the coil windings (which is half of impedance of the coil windings of the coil assembly 1 including only one winding unit 12) can be effectively reduced.

It may be understood that, when the coil assembly includes more than two winding units, the coil assembly may be disposed with reference to the foregoing embodiment to form a parallel structure of the more than two winding units, thereby further reducing impedance of the coil windings of the coil assembly.

With reference to FIG. 14, in some other embodiments of this application, when the coil assembly 1 includes two winding units 12, one winding unit 12 includes a first coil winding 121a, a second coil winding 122a, and a circuit board 123a, and the other winding unit 12 includes a first coil winding 121b, a second coil winding 122b, and a circuit board 123b.

The plurality of first wire groups of the first coil winding 121a are connected to the plurality of second wire groups of the second coil winding 122a by using the circuit board 123a in a staggered manner. The plurality of first wire groups of the first coil winding 121b are connected to the plurality of second wire groups of the second coil winding 122b by using the circuit board 123b in a staggered manner. In this embodiment, during specific arrangement, the circuit board 123a and the circuit board 123b may be disposed with reference to the embodiments shown in FIG. 9a and FIG. 9b, or disposed with reference to the embodiments shown in FIG. 12a and FIG. 12b, or disposed with reference to the embodiment shown in FIG. 13, and details are not described herein again. Certainly, based on the arrangement manner of the circuit board 123a and the circuit board 123b provided in the foregoing embodiments, some variations made to the specific arrangement of the circuit board 123a and the circuit board 123b fall within the protection scope of this application.

In addition, the circuit board 123a and the circuit board 123b may be disposed in a same manner or different manners, provided that the plurality of first wire groups of the first coil winding 121a and the plurality of second wire groups of the second coil winding 122a can be connected by using the circuit board 123a in a staggered manner, so that the plurality of first wire groups of the first coil winding 121b are connected to the plurality of second wire groups of the second coil winding 122b by using the circuit board 123b in a staggered manner.

In this embodiment, the first lead-out end 1212a of the first coil winding 121a is used as a terminal connected to the external circuit. The first lead-out end 1212b of the first coil winding 121b is electrically connected to the second lead-out end 1222a of the second coil winding 122a. The second lead-out end 1222b of the second coil winding 122b is used as another terminal connected to the external circuit. Therefore, the winding unit 12a that includes a structure formed by connecting the first coil winding 121a and the second coil winding 122a by using the circuit board 123a in a staggered manner is connected in series to the winding unit 12b that includes a structure formed by connecting the second coil winding 122b and the second coil winding 122b by using the circuit board 123b in a staggered manner.

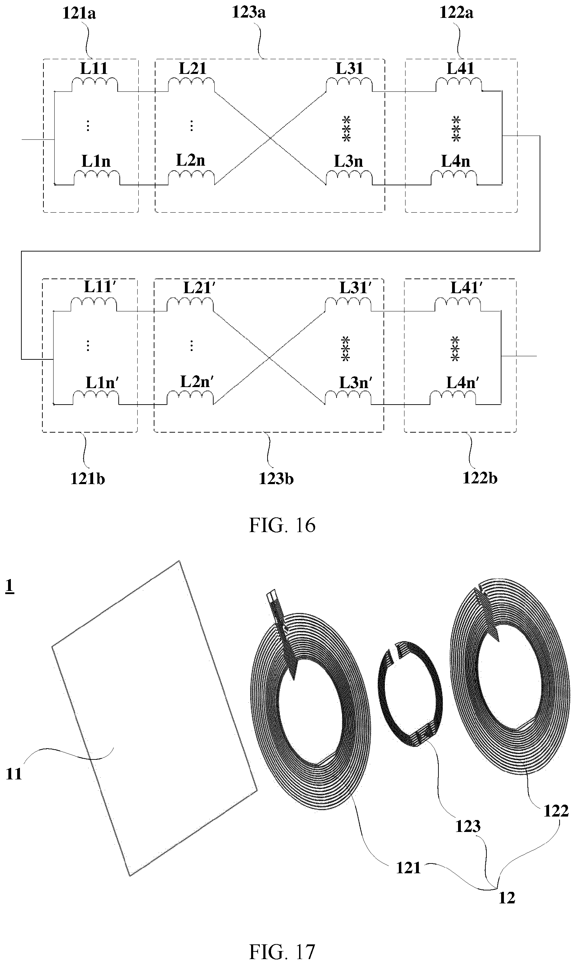

With reference to FIG. 16 together, in this embodiment, a plurality of first wire groups (represented by L11, ..., and L1n respectively) of the first coil winding 121a and a plurality of second wire groups (represented by L41, ..., and L4n respectively) of the second coil winding 122a can be connected by using the circuit board 123a in a staggered manner. A plurality of cables on the first surface of the circuit board 123a are respectively represented by L21, ..., and L2n, and a plurality of cables on the second surface of the circuit board 123a are respectively represented by L31, ..., and L3n. In addition, a plurality of first wire groups (represented by L11', ..., and L1n' respectively) of the first coil winding 121b and a plurality of first wire groups (represented by L41', ..., and L4n' respectively) of the second coil winding 122b are connected by using the circuit board 123b in a staggered manner. A plurality of cables on the first surface of the circuit board 123b are respectively represented by L21', ..., and L2n', and a plurality of cables on the second surface of the circuit board 123b are respectively represented by L31', ..., and L3n'.

In FIG. 16, "." and "*" respectively represent directions of magnetic fluxes, and "." and "*" respectively represent two opposite directions. By using this solution, magnetic fluxes in the gaps between the first wire groups of the first coil winding 121a and magnetic fluxes in the gaps between the second wire groups of the second coil winding 122a can cancel each other, so that the magnetic fluxes in the gaps between the first wire groups of the first coil winding 121b and the magnetic fluxes in the gaps between the second wire groups of the second coil winding 122b cancel each other, to reduce generation of circulating currents in coil gaps of the four coil windings, thereby effectively reducing extra heat generation of the coil windings.

In addition, in this embodiment, the winding unit 12a that includes a structure formed by connecting the first coil winding 121a and the second coil winding 122a by using the circuit board 123a in a staggered manner is connected in series to the winding unit 12b that includes a structure formed by connecting the second coil winding 122b and the second coil winding 122b by using the circuit board 123b in a staggered manner, so that a quantity of turns of coil of the coil assembly 1 can be increased, and magnetic inductance of the coil assembly 1 can be improved. This may be applied to a scenario in which a coil inductance of a coil assembly 1 needs to be adjusted due to a voltage gain.

In some other embodiments, when the coil assembly includes more than two winding units, the coil assembly may be disposed with reference to the foregoing embodiment to form a series structure of the more than two winding units, thereby further increasing the quantity of turns of coil of the coil assembly and improving the magnetic inductance of the coil assembly. In some embodiments of this application, the coil inductance of the coil assembly can be adjusted more flexibly by using a combination of serial connection and parallel connection between winding units.

In some embodiments of this application, with reference to FIG. 17, in addition to the foregoing manner of directly winding a wire, the first coil winding 121 and the second coil winding 122 may be formed, alternatively, the first coil winding 121 and the second coil winding 122 may be manufactured in a circuit board processing manner.

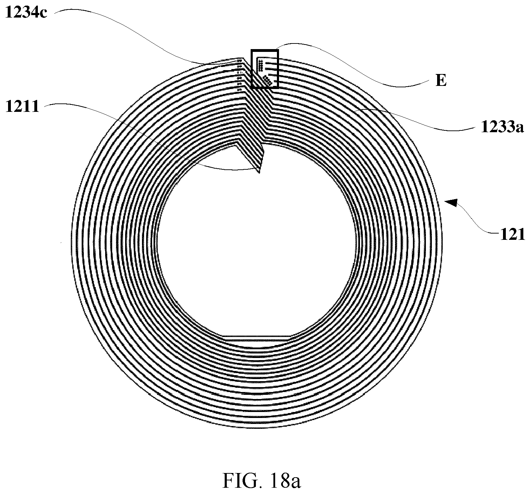

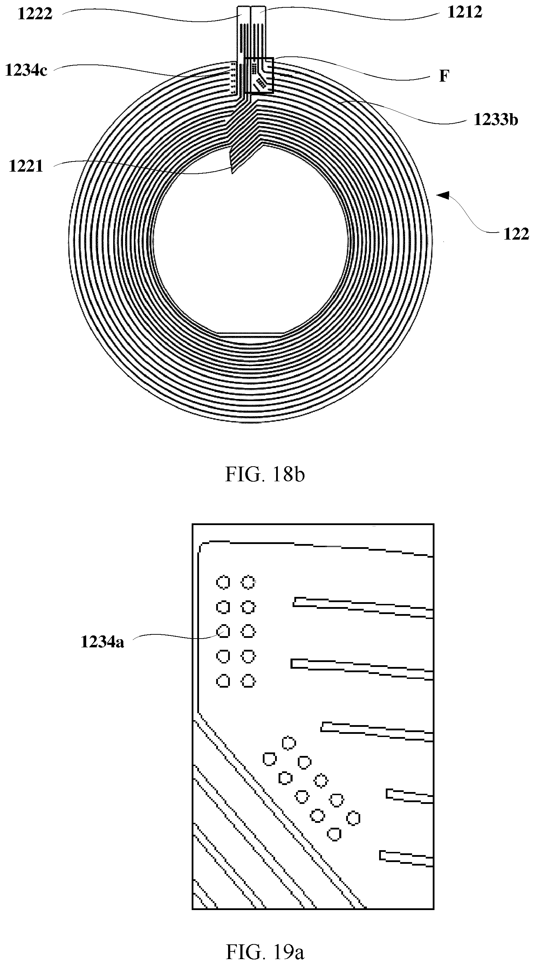

When the first coil winding 121 is formed, a specific arrangement manner of the first coil winding is similar to that of winding a metal wire, so that a plurality of cables on the circuit board may be used as a plurality of wires to form a plurality of turns of coils in a spiral shape on the first surface of the circuit board 123, thereby forming the first coil winding 121 shown in FIG. 18a. Similarly, a plurality of cables form a plurality of turns of coils in a spiral shape on the second surface of the circuit board 123, thereby forming the second coil winding 122 shown in FIG. 18b. It may be understood that a layer structure of the circuit board is omitted in FIG. 18a and FIG. 18b, to clearly show structures of the first coil winding 121 and the second coil winding 122.

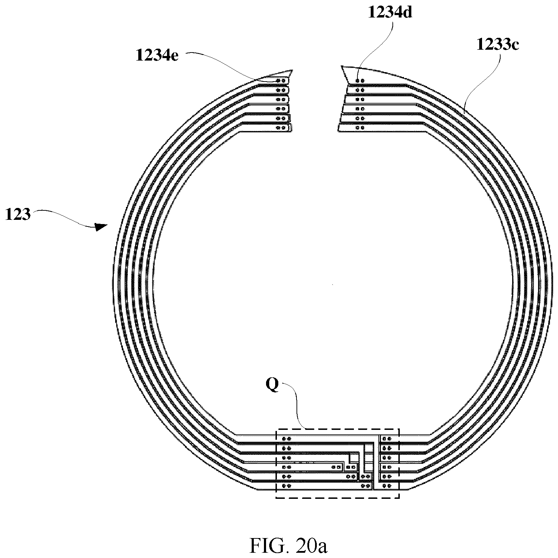

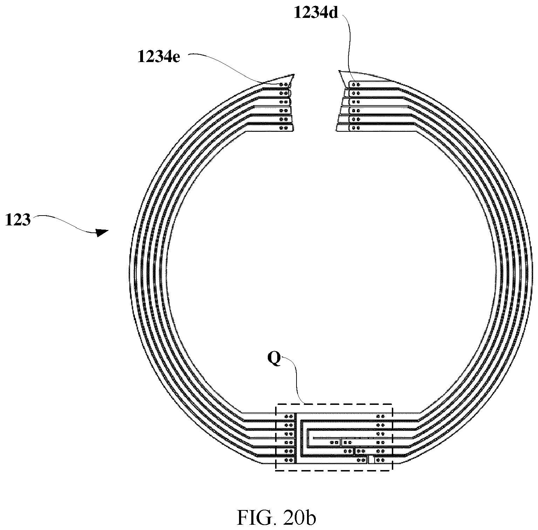

In addition, in this embodiment, the plurality of first terminals, the plurality of second terminals, and the plurality of cables used to connect the plurality of first terminals and the plurality of second terminals on the circuit board 123 may be disposed in a crossed manner with reference to the foregoing embodiment. For example, the plurality of cables 1233c may be changed to different line layers of the circuit board 123 through vias at different positions in the cross region Q shown in FIG. 20a or FIG. 20b to be disposed in a crossed manner. For a specific arrangement manner, refer to the embodiments shown in FIG. 9a and FIG. 9b, and details are not described herein again.

With reference to FIG. 18a and FIG. 18b, an example in which the first terminals are disposed on the first surface of the circuit board, the second terminals are disposed on the second surface, the first coil winding 121 is formed on the first surface of the circuit board, and the second coil winding 122 is formed on the second surface of the circuit board is used. A manner of forming the first coil winding 121 and the second coil winding 122 in this embodiment and a process of connecting the first coil winding 121 to the first terminals and connecting the second coil winding 122 to the second terminals are described.

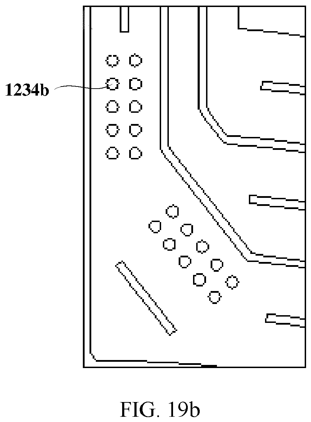

First, with reference to FIG. 18a and FIG. 18b, the plurality of cables 1233a on the first surface and the plurality of cables 1233b on the second surface of the circuit board are connected in parallel through the vias 1234a shown in FIG. 19a and the vias 1234b shown in FIG. 19b. With reference to FIG. 18a and FIG. 18b, the plurality of cables 1233a and the plurality of cables 1233b that are connected in parallel are simultaneously wound for one cycle in a clockwise direction.

Then, the plurality of cables 1233b in FIG. 18b are changed to the first surface of the circuit board shown in FIG. 18a through the vias 1234c, and continue to be wound in a clockwise direction along a trend of decreasing a winding radius to form the first coil winding 121. It may be understood that, as shown in FIG. 18b, start ends of winding of the plurality of cables 1233b may be used as the first lead-out end 1212 of the first coil winding 121, and are used to connect to the external circuit.

Finally, the first connection end 1211 of the first coil winding 121 is connected to the cable 1233c on the second surface of the circuit board through the via 1234d shown in FIG. 20a. The cable 1233c is wound clockwise for one cycle and is changed to the second surface of the circuit board shown in FIG. 18b through the via 1234e in FIG. 20a, is used as the second connection end 1221 of the second coil winding 122, and continues to be wound in a clockwise direction along a trend of increasing a winding radius, to form the second coil winding 122. The second lead-out end 1222 of the second coil winding 122 formed by winding is connected to the external circuit.

By using this solution, magnetic fluxes in the gaps between the first wire groups of the first coil winding 121 and magnetic fluxes in the gaps between the second wire groups of the second coil winding 122 can cancel each other, so that the magnetic fluxes in the gaps between the first wire groups of the first coil winding 121 and the magnetic fluxes in the gaps between the second wire groups of the second coil winding 122 cancel each other, to reduce generation of circulating currents in coil gaps of the coil windings, thereby effectively reducing extra heat generation of the coil windings.

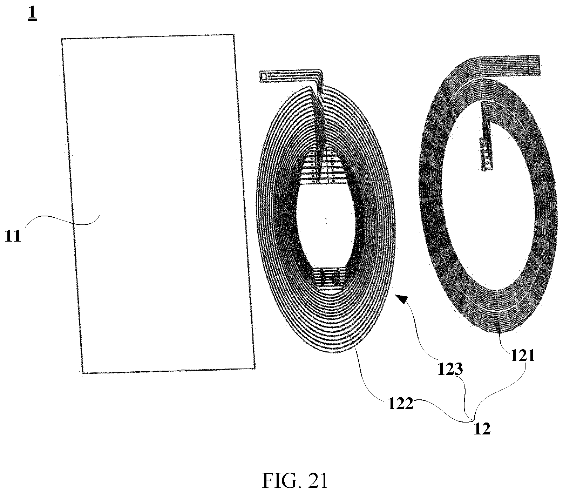

With reference to FIG. 21, in some other embodiments of this application, the first coil winding 121 and the second coil winding 122 may be formed in a same manner. Alternatively, the first coil winding 121 may be an independent coil winding structure formed in a wire winding manner, and the second coil winding 122 is manufactured in a circuit board processing manner.

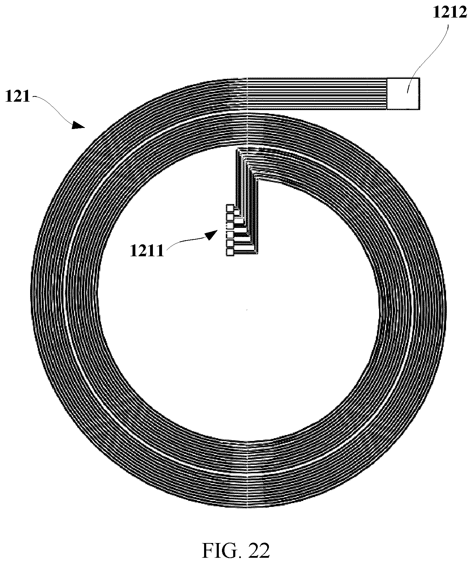

With reference to FIG. 22, in this embodiment, a specific arrangement manner of the first coil winding 121 is the same as a specific arrangement manner of the coil winding formed in the wire winding manner in the foregoing embodiment, and details are not described herein again.

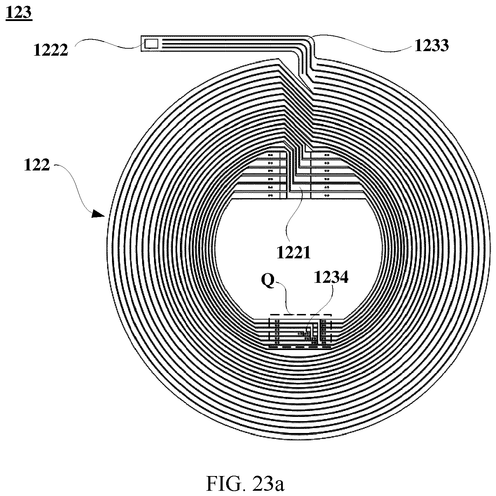

With reference to FIG. 23a, in this embodiment, when the second coil winding 122 is specifically disposed, an example in which the second coil winding 122 is disposed on the first surface of the circuit board 123 is used. First, the plurality of cables 1233 are wound in a clockwise direction along a trend of decreasing a winding radius to form the second coil winding 122, and start ends of winding of the plurality of cables 1233 are used as a second lead-out end 1222 of the second coil winding 122, and finish ends of winding of the plurality of cables 1233 are used as the second connection end 1221 of the second coil winding 122.

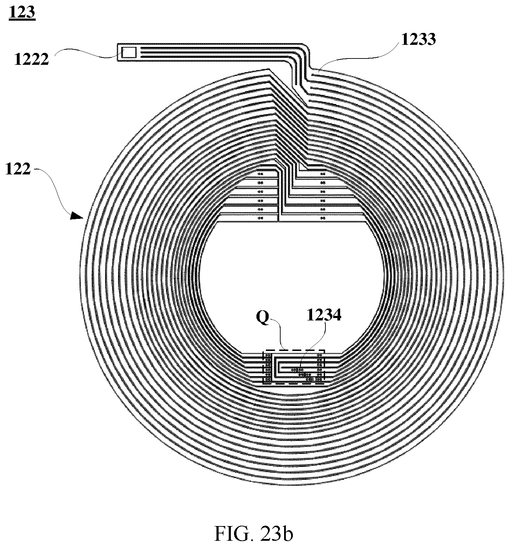

Then, the second connection end 1221 of the second coil winding 122 is used as the second terminal on the circuit board, and the plurality of cables 1233 continue to be wound along a trend of decreasing the winding radius and disposed in a crossed manner. For example, the plurality of cables 1233 may be changed to different line layers of the circuit board 123 through the vias 1234 at different positions in the cross region Q shown in FIG. 23a or FIG. 23b to be disposed in a crossed manner, thereby avoiding a contact short circuit between the plurality of cables 1233. In this embodiment, the plurality of cables 1233 are changed to different line layers of the circuit board 123 through the vias 1234 at different positions in the cross region Q to be disposed in a crossed manner. For details, refer to the embodiments shown in FIG. 9a and FIG. 9b. Details are not described herein again.

Finally, with reference to FIG. 23a and FIG. 23b together, the plurality of cables 1233 are wound on the first surface and the second surface of the circuit board, and form the first terminals. The first terminals may be formed on the first surface or the second surface of the circuit board 123. The first connection end 1211 of the first coil winding 121 may be fastened to the first terminals.

By using this solution, magnetic fluxes in the gaps of the first coil winding 121 and magnetic fluxes in the gaps of the second coil winding 122 can cancel each other, so that the magnetic fluxes in the gaps of the first coil winding 121 and the magnetic fluxes in the gaps of the second coil winding 122 cancel each other, to reduce generation of circulating currents in coil gaps of the coil windings, thereby effectively reducing extra heat generation of the coil windings.

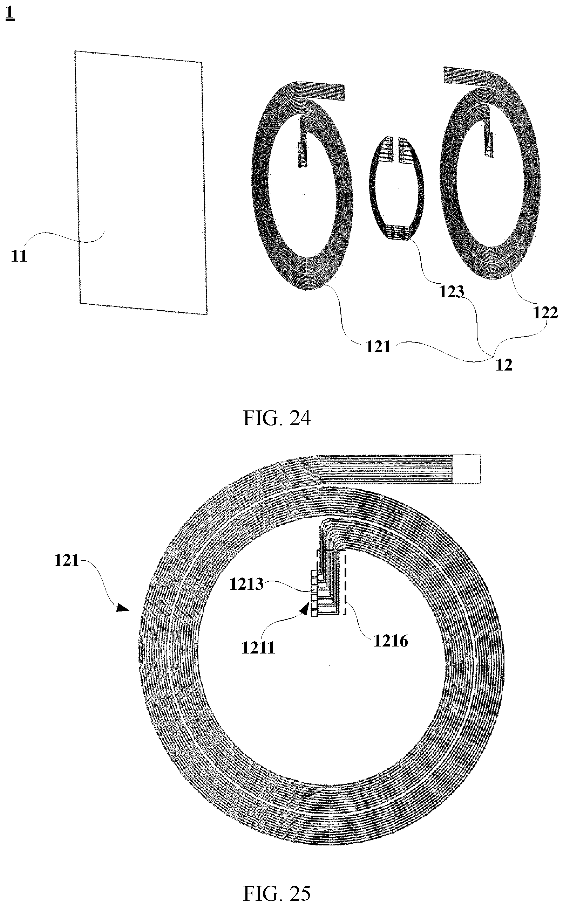

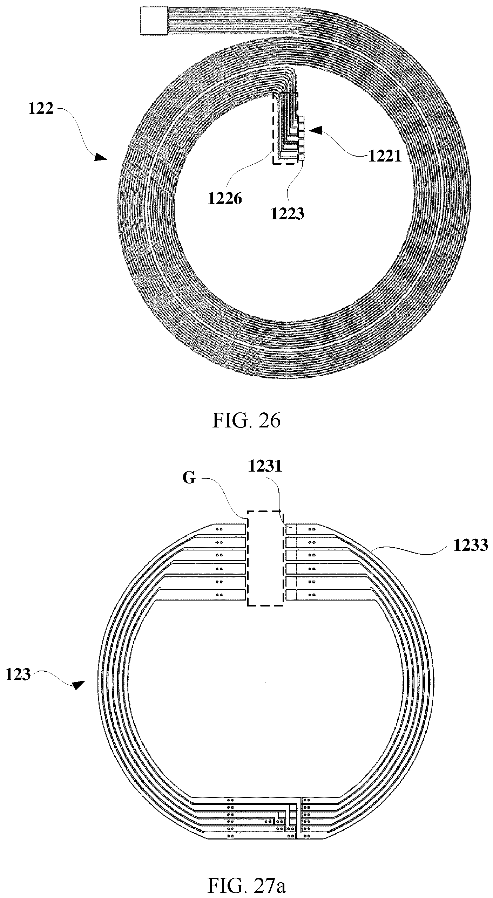

With reference to FIG. 24, in some other embodiments of this application, when both the first coil winding 121 and the second coil winding 122 are independent coil winding structures, with reference to FIG. 25 together, the first connection end 1211 of the first coil winding 121 may extend in the first arrangement direction to form a first extension portion 1216. In this case, the pads 1213 may be disposed at a finish end of the first extension portion 1216. Similarly, with reference to FIG. 26, the second connection end 1221 of the second coil winding 122 may also extend in the first arrangement direction to form a second extension portion 1226, and the pads 1223 may be disposed at a finish end of the second extension portion 226.

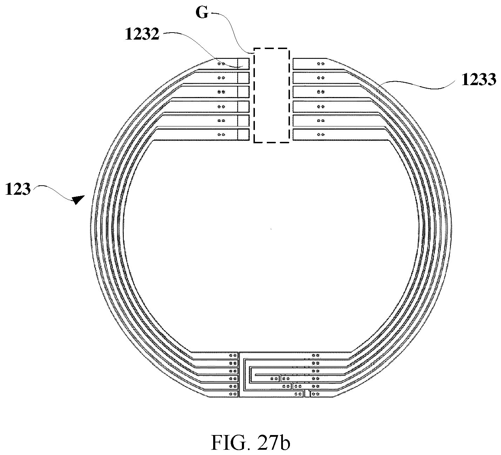

In this embodiment, when the circuit board 123 is specifically disposed, for example, the first terminals of the circuit board 123 are connected to the pads 1231, and the second terminals of the circuit board are connected to the pads 1232. With reference to FIG. 27a and FIG. 27b together, a slot G is opened in the circuit board 123. The slot G is opened in a region between a projection of the pads 1231 connected to the first terminals on the first surface or the second surface of the circuit board 123 and a projection of the pads 1232 connected to the second terminals on the first surface or the second surface of the circuit board 123. In addition, the slot G may be opened in the first arrangement direction.

When the first coil winding 121, the second coil winding 122, and the circuit board 123 are assembled, for example, the first extension portion 1216 of the first coil winding 121 may extend into the slot G of the circuit board 123, the pads 1213 at the finish end of the first extension portion 1216 are soldered to the pads 1231 of the circuit board 123. Similarly, the second extension portion 1226 of the second coil winding 122 may extend into the slot G of the circuit board 123, and the pads 1223 at the end of the second extension portion 1226 are soldered to the pads 1232 of the circuit board 123.

According to the technical solution in embodiments of this application, when the first coil winding 121, the second coil winding 122, and the circuit board 123 are assembled, the first extension portion 1216 of the first coil winding 121 and the second extension portion 1226 of the second coil winding 122 may be disposed in a stacked manner at the slot G of the circuit board 123. In this way, stacking of the first coil winding 121, the second coil winding 122, and the circuit board 123 can be effectively avoided, thereby facilitating implementation of a thin design of the coil assembly 1.

It is verified through tests that, compared with the wireless charging system in the conventional technology, in the wireless charging system in embodiments of this application, when the transmitting coil of the wireless charger 2 directly faces the receiving coil of the electronic device 3, charging efficiency of the wireless charging system is improved by at least 1.3%. When the transmitting coil of the wireless charger 2 deviates from the receiving coil of the electronic device 3 by 10 mm in a horizontal direction, the charging efficiency of the wireless charger is improved by at least 2.39%. Therefore, the charging efficiency of the wireless charging system in embodiments of this application is effectively improved.

Clearly, persons skilled in the art can make various modifications and variations to embodiments of this application without departing from the spirit and scope of embodiments of this application. Embodiments of this application are intended to cover these modifications and variations of this application provided that they fall within the scope of protection defined by the following claims and their equivalent technologies.

## Claims

1. A coil assembly, comprising a winding unit, wherein the winding unit comprises a first coil winding, a second coil winding, and a circuit board, wherein
the first coil winding has a first connection end and a first lead-out end, the first coil winding comprises a plurality of first wire groups disposed side by side, and the first lead-out end is configured to connect to an external circuit;
the second coil winding has a second connection end and a second lead-out end, the second coil winding comprises a plurality of second wire groups disposed side by side, the second lead-out end is configured to connect to the external circuit, and the second coil winding and the first coil winding are disposed in a stacked manner;
the circuit board comprises a plurality of line layers and a plurality of first vias, a plurality of first terminals and a plurality of second terminals are disposed on the plurality of line layers, the first terminal is connected to the second terminal by using a cable, and in a plurality of cables connecting the plurality of first terminals and the plurality of second terminals, at least two of the cables are changed to different line layers in a cross region through the first vias to be disposed in a crossed manner; and
the first connection end is fastened to the first terminals, and the second connection end is fastened to the second terminals.

2. The coil assembly according to claim 1, wherein a quantity of the first wire groups is the same as a quantity of the second wire groups.

3. The coil assembly according to claim 1 or 2, wherein each of the first wire groups has a same quantity of wires or a different quantity of wires.

4. The coil assembly according to any one of claims 1 to 3, wherein each of the second wire groups has a same quantity of wires.

5. The coil assembly according to any one of claims 1 to 3, wherein the first wire group and the second wire group that are connected have a same quantity of wires.

6. The coil assembly according to any one of claims 1 to 5, wherein the first coil winding is an independent coil winding structure, the second coil winding is an independent coil winding structure, the first connection end of the first coil winding extends in a first arrangement direction to form a first extension portion, and the second connection end of the second coil winding extends in the first arrangement direction to form a second extension portion; and
a slot is opened in the circuit board, the slot is provided in a region between a projection of the first terminals onto a first surface or a second surface of the circuit board and a projection of the second terminals onto the first surface or the second surface of the circuit board, the slot is opened in the first arrangement direction, the first extension portion extends into the slot and is connected to the first terminals, the second extension portion extends into the slot and is connected to the second terminals, and the first extension portion and the second extension portion are disposed in a stacked manner at the slot.

7. The coil assembly according to any one of claims 1 to 5, wherein the first coil winding is an independent coil winding structure, the second coil winding is formed on a first surface of the circuit board, the second coil winding is formed by winding a plurality of cables, the second connection end of the second coil winding is used as the second terminals of the circuit board, the first terminals are formed after the cables continue to be wound with a trend of a decreasing winding radius and are disposed in a cross manner, and the first connection end of the first coil winding is electrically connected to the first terminals.

8. The coil assembly according to any one of claims 1 to 5, wherein the first coil winding is formed on a first surface of the circuit board, the second coil winding is formed on a second surface of the circuit board, the first connection end of the first coil winding is electrically connected to the first terminals through a second via at one position, and the second connection end of the second coil winding is electrically connected to the second terminals through a second via at another position.

9. The coil assembly according to any one of claims 1 to 8, wherein the first terminals and the second terminals are disposed on a same surface of the circuit board; or the first terminals are disposed on the first surface of the circuit board, the second terminals are disposed on the second surface of the circuit board, and the first surface is disposed opposite to the second surface.

10. The coil assembly according to any one of claims 1 to 9, wherein a quantity of the plurality of first terminals is n, a quantity of the plurality of second terminals is n, a quantity of the plurality of cables is n, a quantity of the plurality of first vias is n-1, and if the n first terminals are arranged in a first direction and the n second terminals are arranged in the first direction, that the first terminal is connected to the second terminal by using a cable, and in a plurality of cables connecting the plurality of first terminals and the plurality of second terminals, at least two of the cables are changed to different line layers in a cross region through the first vias to be disposed in a crossed manner is specifically: a 1^{st} first terminal is connected to an n^{th} second terminal by using a first cable, a 2^{nd} first terminal is connected to an (n-1)^{th} second terminal by using a second cable, ..., an (n-1)^{th} first terminal is connected to a 2^{nd} second terminal by using an (n-1)^{th} cable, and an n^{th} first terminal is connected to a 1^{st} second terminal by using a n^{th} cable; and the second cable is changed to a line layer different from that of the first cable through a first via at a first position in the cross region, the (n-1)^{th} cable is changed to a line layer different from that of the first cable through a first via at an (n-2)^{th} position in the cross region, and the n^{th} cable is changed to a line layer different from that of the first cable through a first via at an (n-1)^{th} position in the cross region, wherein n is an integer greater than or equal to 2.

11. The coil assembly according to claim 10, wherein the quantity of the first terminals is an even number, the quantity of the second terminals is an even number, and the plurality of cables that are used to connect the plurality of first terminals and the plurality of second terminals are disposed in a pairwise crossed manner.

12. The coil assembly according to claim 10 or 11, wherein if the quantity of the plurality of first terminals is 6 and the quantity of the plurality of second terminals is 6, correspondingly, that the first terminal is connected to the second terminal by using a cable, and in a plurality of cables connecting the plurality of first terminals and the plurality of second terminals, at least two of the cables are changed to different line layers in a cross region through the first vias to be disposed in a crossed manner is specifically: in the first arrangement direction, a 1^{st} first terminal is connected to a 6^{th} second terminal by using a first cable, a 2^{nd} first terminal is connected to a 5^{th} second terminal by using a second cable, a 3^{rd} first terminal is connected to a 4^{th} second terminal by using a third cable, a 4^{th} first terminal is connected to a 3^{rd} second terminal by using a fourth cable, a 5^{th} first terminal is connected to a 2^{nd} second terminal by using a fifth cable, and a 6^{th} first terminal is connected to a 1^{st} second terminal by using a sixth cable; and the second cable is changed to a line layer different from that of the first cable through a first via at a first position in the cross region, the third cable is changed to a line layer different from that of the first cable through a first via at a second position in the cross region, the fourth cable is changed to a line layer different from that of the first cable through a first via at a third position in the cross region, the fifth cable is changed to a line layer different from that of the first cable through a first via at a fourth position in the cross region, and the sixth cable is changed to a line layer different from that of the first cable through a first via at a fifth position in the cross region.

13. The coil assembly according to claim 10, wherein if the quantity of the plurality of first terminals is 5 and the quantity of the plurality of second terminals is 5, correspondingly, that the first terminal is connected to the second terminal by using a cable, and in a plurality of cables connecting the plurality of first terminals and the plurality of second terminals, at least two of the cables are changed to different line layers in a cross region through the first vias to be disposed in a crossed manner is specifically: in the first arrangement direction, a 1^{st} first terminal is connected to a 5^{th} second terminal by using a first cable, a 2^{nd} first terminal is connected to a 1st fourth terminal by using a second cable, a 3^{rd} first terminal is connected to a 2^{nd} second terminal by using a third cable, a 4^{th} first terminal is connected to a 3^{rd} second terminal by using a fourth cable, and a 5^{th} first terminal is connected to a 1^{st} second terminal by using a fifth cable; and the second cable is changed to a line layer different from that of the first cable through a first via at a first position in the cross region, the third cable is changed to a line layer different from that of the first cable through a first via at a second position in the cross region, the fourth cable is changed to a line layer different from that of the first cable through a first via at a third position in the cross region, and the fifth cable is changed to a line layer different from that of the first cable through a first via at a fourth position in the cross region.

14. The coil assembly according to any one of claims 1 to 13, wherein for two cables disposed in a crossed manner, an area defined by a projection of one cable onto the first surface or the second surface of the circuit board is close to an area defined by a projection of the other cable onto the first surface or the second surface of the circuit board.

15. The coil assembly according to any one of claims 1 to 14, wherein a spacing between every two adjacent cables is equal.

16. The coil assembly according to any one of claims 8 to 14, wherein widths of the plurality of cables are the same; or a radius of a coil formed by the cables is directly proportional to widths of the cables.

17. The coil assembly according to any one of claims 1 to 16, wherein the coil assembly comprises a plurality of winding units, and the plurality of winding units are disposed in a stacked manner; and first lead-out ends of first coil windings of a plurality of coil units are connected to connect to the external circuit, and lead-out ends of second coil windings of the plurality of coil units are connected to connect to the external circuit.

18. The coil assembly according to any one of claims 1 to 16, wherein the coil assembly comprises a plurality of winding units, and the plurality of winding units are disposed in a stacked manner; and in two adjacent winding units, a second lead-out end of a second coil winding of one winding unit is connected to a first lead-out end of a first coil winding of the other winding unit.

19. The coil assembly according to any one of claims 1 to 18, wherein the coil assembly further comprises a magnetic conductive sheet, the winding unit is disposed on a surface of a side of the magnetic conductive sheet, and the winding unit and the magnetic conductive sheet are insulated from each other.

20. The coil assembly according to claim 19, wherein a material of the magnetic conductive sheet is one or more of a ferrite material, an amorphous material, a nanocrystal material, and a metal powder core material.

21. An electronic device, comprising a powered circuit and the coil assembly according to any one of claims 1 to 20, wherein the coil assembly is electrically connected to the powered circuit.

22. A wireless charger, comprising a power supply circuit and the coil assembly according to any one of claims 1 to 20, wherein the coil assembly is electrically connected to the power supply circuit.

23. A wireless charging system, comprising an electronic device and a wireless charger, wherein at least one of the electronic device and the wireless charger comprises the coil assembly according to any one of claims 1 to 20, and the wireless charger is configured to wirelessly charge the electronic device.
